# EUROPÄISCHE PATENTSCHRIFT

(11) **EP 1 005 508 B1**
(45) Veröffentlichungstag und Bekanntmachung des Hinweises auf die Patenterteilung: **13.11.2002**
(21) Anmeldenummer: 98945257.8
(22) Anmeldetag: 18.08.1998
(51) Int. Cl.: C08L 57/04, C08K 5/17

(54) **WÄSSRIGE ZUSAMMENSETZUNGEN**
AQUEOUS COMPOSITIONS
COMPOSITIONS AQUEUSES

(30) Priorität: 19.08.1997 DE 19735959
(43) Veröffentlichungstag der Anmeldung: 07.06.2000
(73) Patentinhaber: BASF AKTIENGESELLSCHAFT, 67056 Ludwigshafen (DE)
(72) Erfinder: RECK, Bernd, D-67269 Grünstadt (DE); DREHER, Stefan, D-67433 Neustadt (DE); BECKERLE, Wilhelm, Friedrich, D-67240 Bobenheim-Roxheim (DE); WISTUBA, Eckehardt, D-67098 Bad Dürkheim (DE); ROSER, Joachim, D-68165 Mannheim (DE); TÜRK, Johannes, D-67459 Böhl-Iggelheim (DE)
(74) Vertreter: Kinzebach, Werner, Dr.
(86) Internationale Anmeldenummer: EP9805250
(87) Internationale Veröffentlichungsnummer: WO99009100

(56) Entgegenhaltungen:
- PATENT ABSTRACTS OF JAPAN vol. 095, no. 008, 29. September 1995 & JP 07 118619 A (SEKISUI CHEM CO LTD), 9. Mai 1995

## Beschreibung

Die vorliegende Erfindung betrifft die Verwendung thermisch härtbarer, wässriger Zusammensetzungen, die eine säurearme und eine säurereiche Polymerisatkomponente sowie ein hydroxyalkyliertes Amin enthalten, als Bindemittel für Formkörper.

Die Verfestigung von flächenförmigen Fasergebilden, beispielsweise Faservliesen, Formkörpern wie Spanplatten, etc. erfolgt häufig auf chemischem Weg unter Verwendung eines polymeren Bindemittels. Zur Erhöhung der Festigkeit, insbesondere der Naß- und Wärmestandfestigkeit, werden vielfach Bindemittel eingesetzt, welche Formaldehyd abspaltende Vernetzer enthalten. Damit besteht aber die Gefahr von Formaldehydemissionen.

Zur Vermeidung von Formaldehydemissionen wurden bereits zahlreichen Alternativen zu den bisher bekannten Bindemitteln vorgeschlagen. So sind aus der US-A-4,076,917 Bindemittel bekannt, welche Carbonsäure- oder Carbonsäureanhydrid-haltige Polymerisate und β-Hydroxyalkylamide als Vernetzer enthalten. Das molare Verhältnis von Carboxylgruppen zu Hydroxylgruppen beträgt bevorzugt 1:1. Nachteilig ist die relativ aufwendige Herstellung der β-Hydroxyalkylamide.

Aus der EP-A-445 578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren. Als hochmolekulare Polycarbonsäuren werden Polyacrylsäure, Copolymere aus Methylmethacrylat/n-Butylacrylat/Methacrylsäure und aus Methylmethacrylat/Methacrylsäure beschrieben. Als mehrwertige Alkohole bzw. Alkanolamine werden 2-Hydroxymethylbutan-1,4-diol, Trimethylolpropan, Glycerin, Poly(methylmethacrylat-co-hydroxypropylacrylat), Diethanolamin und Triethanolamin eingesetzt. Die Wasserfestigkeit der erhaltenen Platten ist jedoch nicht zufriedenstellend.

Aus der EP-A-583 086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen. Verwendung findet insbesondere Polyacrylsäure. Das Bindemittel enthält weiterhin ein Polyol, beispielsweise Glycerin, Bis-[N,N-Di(β-hydroxyethyl)adipamid, Pentaerythrit, Diethylenglykol, Ethylenglykol, Gluconsäure, β-D-Lactose, Sucrose, Polyvinylalkohol, Diisopropanolamin, 2-(2-Aminoethylamino)ethanol, Triethanolamin, Tris(hydroxymethylamino)methan und Diethanolamin. Diese Bindemittel benötigen einen phosphorhaltigen Reaktionsbeschleuniger, um ausreichende Festigkeiten der Glasfaservliese zu erreichen. Es wird darauf hingewiesen, daß auf die Anwesenheit eines derartigen Reaktionsbeschleunigers nur verzichtet werden kann, wenn ein hochreaktives Polyol eingesetzt wird. Als hochreaktive Polyole werden die β-Hydroxyalkylamide genannt.

Die EP-A-651 088 beschreibt entsprechende Bindemittel für Substrate aus Cellulosefaser. Diese Bindemittel enthalten zwingend einen phosphorhaltigen Reaktionsbeschleuniger.

Die EP-A-672 920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Naßreißfestigkeiten erzielt. Im Rahmen von Vergleichsversuchen wurden auch aminhaltige Vernetzungsmittel und überwiegend linear aufgebaute Polyole getestet. Es wird darauf hingewiesen, daß aminhaltige Vernetzungsmittel flokkulierend wirken und daß die überwiegend linear aufgebauten Polyole zu schwächerer Vernetzung führen als die cyclischen Polyole.

Die DE-A-22 14 450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muß jedoch auf bis zu 300°C erhitzt werden.

Die EP-A-257 567 beschreibt eine Polymerzusammensetzung, die erhältlich ist durch Emulsionspolymerisation von ethylenisch ungesättigten Monomeren, wie Olefine, vinylaromatische Verbindungen, α,β-ethylenisch ungesättigte Carbonsäuren und deren Ester, ethylenisch ungesättigte Dicarbonsäureanhydride und Vinylhalogenide. Während der Polymerisation wird ein in Wasser oder Alkali lösliches oder dispergierbares Harz mit einem zahlenmittleren Molekulargewicht von etwa 500 bis etwa 20000 zugegeben, um die Fließeigenschaften der Polymerisatzusammensetzung zu beeinflussen. Das Harz ist aus Olefinen, vinylaromatischen Verbindungen, α,β-ethylenisch ungesättigten Carbonsäuren und den Estern davon oder ethylenisch ungesättigten Dicarbonsäureanhydriden aufgebaut. Als alkalisches Medium, in dem das erwähnte Harz löslich oder dispergierbar sein soll, wird Ammoniumhydroxid angegeben. Die Zusammensetzung ist zur Herstellung von formaldehydfreien Beschichtungen von Holzsubstraten brauchbar.

Die EP-A-576 128 beschreibt repulpierbare Klebstoffzusammensetzungen, die eine säurereiche Polymerkomponente und eine säurearme Polymerkomponente enthalten. Die säurereiche Polymerkomponente basiert auf einem monomeren Gemisch von 40 bis 95% eines Alkylacrylats oder -methacrylats und 5 bis 60% einer ethylenisch ungesättigten Säure, wie Acrylsäure oder Methacrylsäure. Die säurearme Polymerkomponente basiert auf einem Monomergemisch aus 90 bis 100% eines Alkylacrylats oder Alkylmethacrylats und 0 bis 10% einer ethylenisch ungesättigten Säure. Die Herstellung der Zusammensetzung erfolgt durch wässrige Emulsionspolymerisation, wobei die säurereiche Polymerkomponente in Anwesenheit der säurearmen Polymerkomponente oder umgekehrt polymerisiert wird. Der pH der Zusammensetzung wird durch Zugabe von Ammoniumhydroxid oder Natriumhydroxid auf den gewünschten Wert eingestellt. Die Zusammensetzung ist als druckempfindlicher Klebstoff, Laminationsklebstoff, Klebstoff für textile Gewebe, Fliesen und Verpackungen und als Holzleim brauchbar.

In der US-A-4,420,583 und der EP-A-098091 wird eine Bindemittelzusammensetzung aus einer säurereichen Polymer-Dispersion und einem Lösungsmittelpolymerisat beschrieben. Der Latex basiert auf einer Monomerzusammensetzung von Vinylaromaten und Alkyl(meth)-acrylaten sowie bis zu 20 % einer ethylenisch ungesättigten Säure. Das Lösungspolymerisat enthält mindestens 10 % eines (Halogenhydroxypropyl)ammoniumgruppen-haltigen Monomers. Die Zusammensetzung ist lagerstabil und härtet nach Zugabe von Base (NaOH o. ä.) bei Raumtemperatur aus. Sie findet so für formaldehydfreie Bindemittel, Kleber und Beschichtungen Verwendung.

Die US-A-5,314,943 beschreibt eine Mischung bestehend aus einer Polymer-Dispersion und einem wasserlöslichen Copolymer und deren Verwendung als Bindemittel für Faservliese. Das Polymerisat enthält neben Vinylaromaten und Alkyl(meth)acrylaten bevorzugt bifunktionelle Monomere wie Butadien und Vinylacrylate. Das Lösungspolymerisat ist in bis zu 5 % in der Mischung enthalten und besteht aus 25 bis 60 % aus einer ethylenisch ungesättigten Monocarbonsäure und 40 bis 75 % einer ethylenisch ungesättigten Dicarbonsäure. Nachteilig sind die hohen Temperaturen, die zur Aushärtung notwendig sind.

Die US-A-4,868,016 beschreibt eine Zusammensetzung auf Basis von wenigstens einem thermoplastischen, in wässrigem alkalischem Medium unlöslichen Latexpolymer und wenigstens einem alkalilöslichen Polymer, das mit dem Latexpolymer nicht kompatibel ist. Das Latexpolymer ist ein in Wasser dispergiertes Polymer, das aus Acrylsäure- oder Methacrylsäureestern, vinylaromatischen Verbindungen und Vinylestern aufgebaut sein kann und zusätzlich 0,5 bis 3 Gew.-% einer ethylenisch ungesättigten Carbonsäure einpolymerisiert enthält. Auch das alkalilösliche Polymer ist aus den genannten Monomeren aufgebaut, enthält jedoch 10 bis 60 Gew.-% einer ethylenisch ungesättigten Carbonsäure. Zur Einstellung des pH-Wertes auf > 7 kann die Zusammensetzung Ammoniak, Triethylamin, Ethylamin oder Dimethylhydroxyethylamin enthalten. Sie ist dazu brauchbar, Substrate mit einem Überzug zu versehen.

Der vorliegenden Erfindung liegt die Aufgabe zugrunde, formaldehydfreie Bindemittel für Formkörper zur Verfügung zu stellen, die ein rasches Härten bei niedriger Temperatur erlauben und dem Substrat gute mechanische Eigenschaften sowie eine hohe Klimabeständigkeit verleihen.

Überraschenderweise wurde nun gefunden, daß diese Aufgabe gelöst wird, wenn man eine Zusammensetzung verwendet, die ein carboxylgruppenarmes Polymerisat, ein carboxylgruppenreiches Polymerisat und ein Amin mit mindestens zwei Hydroxyalkylgruppen enthalten.

Gegenstand der vorliegenden Erfindung ist daher die Verwendung von thermisch härtbaren, wässrigen, Zusammensetzungen, enthaltend
A) mindestens ein durch radikalische Polymerisation erhältliches Polymerisat, das ≤ 5 Gew.-% einer α,β-ethylenisch ungesättigten Mono- oder Dicarbonsäure einpolymerisiert enthält,
B) mindestens ein durch radikalische Polymerisation erhältliches Polymerisat, das ≥ 15 Gew.-% einer α,β-ethylenisch ungesättigten Mono- oder Dicarbonsäure einpolymerisiert enthält, und
C) mindestens ein Alkanolamin mit wenigstens zwei OH-Gruppen, als Bindemittel für Form Körper.

Im Rahmen der vorliegenden Erfindung steht Alkyl vorzugsweise für geradkettige oder verzweigte C₁-C₁₈-Alkylreste, insbesondere C₁-C₁₂- und besonders bevorzugt C₁-C₆-Alkylreste, wie Methyl, Ethyl, n-Propyl, i-Propyl, n-Butyl, sek.-Butyl, tert.-Butyl, n-Pentyl, n-Hexyl, 2-Ethylhexyl, n-Dodecyl oder n-Stearyl.

Hydroxyalkyl steht vorzugsweise für Hydroxy-C₁-C₆-alkyl und insbesondere für 2-Hydroxyethyl und 2- oder 3-Hydroxypropyl.

Cycloalkyl steht vorzugsweise für C₅-C₇-Cyclohexyl, insbesondere Cyclopentyl und Cyclohexyl.

Aryl steht vorzugsweise für Phenyl oder Naphthyl.

### Komponente (A):

Als Komponente (A) kann jedes durch radikalische Polymerisation erhältliche Polymerisat eingesetzt werden, das ≤ 5 Gew.-% einer α,β-ethylenisch ungesättigten Mono- oder Dicarbonsäure einpolymerisiert enthält. Im allgemeinen wird es sich um ein durch Emulsionspolymerisation erhaltenes Polymerisat handeln. In gleicher Weise können jedoch auch Polymerisate eingesetzt werden, welche durch eine andere Polymerisationsart, beispielsweise durch Suspensionspolymerisation, erhältlich sind. Vorzugsweise wird das Polymerisat in Form einer Dispersion eingesetzt, die insbesondere einen Polymerisatgehalt im Bereich von 40 bis 80 Gew.-%, insbesondere 50 bis 75 Gew.-%, aufweist. Es kann sich dabei um eine Primärdispersion handeln, d.h. um eine Dispersion, so wie sie bei der Emulsionspolymerisation anfällt, oder um eine Sekundärdispersion, d.h. um eine Dispersion, die durch nachträgliches Dispergieren eines bereits isolierten Polymerisates im Dispersionsmedium erhalten worden ist.

Beim Dispersionsmedium handelt es sich in der Regel um Wasser. Es können jedoch auch mit Wasser mischbare organische Lösungsmittel, wie Alkohole und Ketone, beispielsweise Methanol, Ethanol, n-Propanol, Isopropanol, n-Butanol, Aceton oder Methylethylketon, enthalten sein.

Bei den α,β-ethylenisch ungesättigten Mono- und Dicarbonsäuren handelt es sich insbesondere um solche mit 3 bis 6 Kohlenstoffatomen. Beispiele hierfür sind Acrylsäure, Methacrylsäure, Crotonsäure, Fumarsäure, Maleinsäure, 2-Methylmaleinsäure oder Itaconsäure sowie Halbester von ethylenisch ungesättigten Dicarbonsäuren, wie Maleinsäuremonoalkylester von C₁-C₈-Alkanolen.

Im übrigen kann das Polymerisat (A) jedes ethylenisch ungesättigte Monomer einpolymerisiert enthalten, das mit der Mono- oder Dicarbonsäure copolymerisierbar ist (Monomere b). Derartige Monomere sind:
Vinylaromatische Verbindungen wie Styrol, α-Methylstyrol und Vinyltoluole (Monomere b₁).

Lineare 1-Olefine, verzweigtkettige 1-Olefine oder cyclische Olefine (Monomere b₂), wie z.B. Ethen, Propen, Buten, Isobuten, Penten, Cyclopenten, Hexen, Cyclohexen, Octen, 2,4,4-Trimethyl-1-penten gegebenenfalls in Mischung mit 2,4,4-Trimethyl-2-penten, C₈-C₁₀-Olefin, 1-Dodecen, C₁₂-C₁₄-Olefin, Octadecen, 1-Eicosen (C₂₀), C₂₀-C₂₄-Olefin; metallocenkatalytisch hergestellte Oligoolefine mit endständiger Doppelbindung, wie z.B. Oligopropen, Oligohexen und Oligooctadecen; durch kationische Polymerisation hergestellte Olefine mit hohem α-Olefin-Anteil, wie z.B. Polyisobuten. Vorzugsweise ist jedoch kein Ethen oder kein lineares 1-Olefin in das Polymerisat einpolymerisiert.

### Butadien.

Vinyl- und Allylalkylether mit 1 bis 40 Kohlenstoffatomen im Alkylrest, wobei der Alkylrest noch weitere Substituenten wie eine Hydroxylgruppe, eine Amino- oder Dialkylaminogruppe oder eine bzw. mehrere Alkoxylatgruppen tragen kann (Monomere b₃), wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-nbutyl-amino)ethylvinylether, Methyldiglykolvinylether sowie die entsprechenden Allylether bzw. deren Mischungen.

Acrylamide und alkylsubstituierte Acrylamide (Monomere b₄), wie z.B. Acrylamid, Methacrylamid, N-tert.-Butylacrylamid, N-Methyl(meth)acrylamid.

Sulfogruppenhaltige Monomere (Monomere b₅), wie z.B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen.

C₁- bis C₈-Alkylester oder C₁- bis C₄-Hydroxyalkylester von C₃bis C₆-Mono- oder Dicarbonsäuren (siehe oben), insbesondere der Acrylsäure, Methacrylsäure oder Maleinsäure oder Ester von mit 2 bis 50 Mol Ethylenoxid, Propylenoxid, Butylenoxid oder Mischungen davon alkoxylierten C₁- bis C₁₈-Alkoholen mit den erwähnten Säuren (Monomere b₆), wie z.B. Methyl(meth)acrylat, Ethyl(meth)acrylat, Propyl(meth)acrylat, Isopropyl(meth) acrylat, Butyl(meth)acrylat, Hexyl(meth)acrylat, 2-Ethylhexyl (meth)acrylat, Hydroxyethyl(meth)acrylat, Hydroxypropyl(meth) acrylat, Butandiol-1,4-monoacrylat, Maleinsäuredibutylester, Ethyldiglykolacrylat, Methylpolyglykolacrylat (11 EO), (Meth)acrylsäureester von mit 3,5,7,10 oder 30 Mol Ethylenoxid umgesetztem C₁₃/C₁₅-Oxoalkohol bzw. deren Mischungen.

Alkylaminoalkyl(meth)acrylate oder Alkylaminoalkyl(meth)acrylamide oder deren Quaternisierungsprodukte (Monomere b₇), wie z.B. 2-(N,N-Dimethylamino)ethyl(meth)acrylat, 3-(N,N-Dimethylamino)-propyl(meth)acrylat, 2-(N,N,N-Trimethylammonium)ethyl (meth)acrylat-chlorid, 2-Dimethylaminoethyl(meth)acrylamid, 3-Dimethylaminopropyl(meth)acrylamid, 3-Trimethylammoniumpropyl(meth)acrylamid-chlorid.

Vinyl- und Allylester von C₁- bis C₃₀-Monocarbonsäuren (Monomere b₈), wie z.B. Vinylformiat, Vinylacetat, Vinylpropionat, Vinylbutyrat, Vinylvalerat, Vinyl-2-ethylhexanoat, Vinylnonoat, Vinyldecanoat, Vinylpivalat, Vinylpalmitat, Vinylstearat, Vinyllaurat.

Als weitere Monomere b₉ seien noch genannt:
N-Vinylformamid, N-Vinyl-N-methylformamid, Styrol, α-Methylstyrol, 3-Methylstyrol, Butadien, N-Vinylpyrrolidon, N-Vinylimidazol, 1-Vinyl-2-methylimidazol, 1-Vinyl-2-methyl-imidazolin, N-Vinylcaprolactam, Acrylnitril, Methacrylnitril, Allylalkohol, 2-Vinylpyridin, 4-vinylpyridin, Diallyldimethylammoniumchlorid, Vinylidenchlorid, Vinylchlorid, Acrolein, Methacrolein und Vinylcarbazol bzw. Mischungen davon.

Bevorzugte weitere Monomere sind die erwähnten Ester der Acrylsäure und Methacrylsäure, die vinylaromatischen Verbindungen, Butadien, Vinylester, (Meth)acrylnitril und die erwähnten (Meth)acrylamide.

Besonders bevorzugte Comonomere sind Methacrylat, Ethylacrylate, Butylacrylate, 2-Ethylhexylacrylat, Methylmethacrylat, Butylmethacrylate, Hydroxyethylacrylate, Hydroxypropylacrylat, Hydroxybutylacrylate, Hydroxyethylmethacrylat, Styrol, Butadien, Vinylacetat, Acrylnitril, Methacrylnitril, Acrylamid, Methacrylamid und/oder N-Butylacrylamid.

Die Polymerisate können nach üblichen Polymerisationsverfahren hergestellt werden, z.B. durch radikalische Substanz-, Emulsions-, Suspensions-, Dispersions-, Lösungs- und Fällungspolymerisation. Bei den genannten Polymerisationsverfahren wird bevorzugt unter Ausschluß von Sauerstoff gearbeitet, vorzugsweise in einem Stickstoffstrom. Für alle Polymerisationsmethoden werden die üblichen Apparaturen verwendet, z.B. Rührkessel, Rührkesselkaskaden, Autoklaven, Rohrreaktoren und Kneter. Bevorzugt wird nach der Methode der Emulsions-, Fällungs- oder Suspensionspolymerisation gearbeitet. Besonders bevorzugt ist die Methode der Emulsionspolymerisation im wässrigen Medium.

Bei Anwendung der wässrigen Emulsionspolymerisation erhält man Polymerisate mit einem gewichtsmittleren Molekulargewicht von 1000 bis 2 000 000, vorzugsweise 5000 bis 500 000. Die K-Werte liegen im allgemeinen im Bereich von 15 bis 150 (1 gew.-%ig in Dimethylformamid). Die gewichtsmittlere Teilchengröße (bestimmt mittels Ultrazentrifuge) liegt vorzugsweise im Bereich von 50 bis 1000 nm. Die Dispersion kann monomodale oder polymodale Teilchengrößenverteilung aufweisen. Die Emulsionspolymerisation kann so durchgeführt werden, daß der Feststoffvolumengehalt im Bereich von 20 bis 70 %, vorzugsweise 30 bis 60 % liegt.

Die Durchführung der Emulsionspolymerisation mit den erwähnten Carbonsäuregruppen enthaltenden Monomeren erfolgt in üblicher Weise, z.B. wie in der DE-A-31 34 222 oder der US-A-5,100,582 beschrieben.

Die Polymerisation wird vorzugsweise in Gegenwart von Radikale bildenden Verbindungen (Initiatoren) durchgeführt. Man benötigt von diesen Verbindungen vorzugsweise 0,05 bis 15, besonders bevorzugt 0,2 bis 8 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme können als Polymerisationsinitiatoren verwendet werden.

Die Initiatoren können allein oder in Mischung untereinander angewendet werden, z.B. Mischungen aus Wasserstoffperoxid und Natriumperoxidisulfat. Für die Polymerisation in wässrigem Medium werden bevorzugt wasserlösliche Initiatoren eingesetzt.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, C₁- bis C₄-Aldehyde, wie Formaldehyd, Acetaldehyd, Propionaldehyd, Hydroxylammoniumsalze wie Hydroxylammoniumsulfat, Ameisensäure, Natriumbisulfit oder Isopropanol. Die Polymerisationsregler werden im allgemeinen in Mengen von 0,1 bis 10 Gew.-%, bezogen auf die Monomeren eingesetzt.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000.

Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomere® der Th. Goldschmidt AG). Die Vernetzer werden vorzugsweise in Mengen von 10 ppm bis 5 Gew.-%, bezogen auf die zu polymerisierenden Monomere, eingesetzt.

Wird nach der Methode der Emulsions-, Fällungs-, Suspensions- oder Dispersionspolymerisation gearbeitet, so kann es vorteilhaft sein, die Polymertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Bevorzugt sind anionische Emulgatoren, beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden z.B. verwendet: quaternisierte Aminoalkoxylate, Alkylbetaine, Alkylamidobetaine und Sulfobetaine.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE 2 501 123 beschrieben sind.

Die Emulgatoren oder Schutzkolloide werden üblicherweise in Konzentrationen von 0,05 bis 20 Gew.-%, bezogen auf die Monomere, eingesetzt.

Wird in wässriger Emulsion oder Verdünnung polymerisiert, so können die Monomere vor oder während der Polymerisation ganz oder teilweise durch übliche, anorganische oder organische Basen neutralisiert werden. Geeignete Basen sind z.B. Alkali- oder Erdalkaliverbindungen, wie Natrium-, Kalium- oder Calciumhydroxid, Natriumcarbonat, Ammoniak und primäre, sekundäre oder tertiäre Amine, wie Di- oder Triethanolamin.

Besonders bevorzugt werden die ethylenisch ungesättigten Carbonsäuren vor und während der Polymerisation nicht neutralisiert. Bevorzugt wird auch nach der Polymerisation kein Neutralisierungsmittel, abgesehen von der Komponente (C), zugesetzt.

Die Durchführung der Polymerisation kann in üblicher Weise nach einer Vielzahl von Varianten kontinuierlich oder diskontinuierlich erfolgen.

Wird das Polymerisat nach der Methode einer Lösungs-, Fällungs- oder Suspensionspolymerisation in einem wasserdampfflüchtigen Lösungsmittel oder Lösungsmittelgemisch hergestellt, so kann das Lösungsmittel durch Einleiten von Wasserdampf abgetrennt werden, um so zu einer wässrigen Lösung oder Dispersion zu gelangen. Das Polymerisat kann von dem organischen Verdünnungsmittel auch durch einen Trocknungsprozeß abgetrennt werden.

### Komponente (B):

Die Komponente (B) ist zu 15 bis 100 Gew.-%, vorzugsweise 20 bis 100 Gew.-% und insbesondere 40 bis 100 Gew.-% aus mindestens einer ethylenisch ungesättigten Mono- oder Dicarbonsäure aufgebaut. Das Polymerisat kann auch teilweise oder vollständig in Form eines Salzes vorliegen, bevorzugt ist die saure Form. Vorzugsweise ist das Polymerisat, sowohl in der sauren Form als auch in Form des Salzes, in Wasser löslich. Es ist im wesentlichen frei von Carbonsäureanhydridstrukturen.

Das gewichtsmittlere Molekulargewicht der Komponente (B) ist größer als 500 und im allgemeinen kleiner als 5 Millionen. Die K-Werte der Polymerisate (nach H. Fikentscher, Cellulose-Chemie 13 (1932), S. 58-64, 71 und 74), die ein Maß für das Molekulargewicht darstellen, liegen im allgemeinen im Bereich von 10 bis 150 (gemessen in 1 gew.-%iger Lösung). Das Polymerisat weist im Mittel im allgemeinen mindestens 4 Carbonsäuregruppen oder davon abgeleitete Salzgruppen pro Polymerkette auf.

Brauchbare ethylenisch ungesättigte Carbonsäuren wurden bereits oben im Zusammenhang mit Komponente (A) genannt. Die Polymerisate können auch ausgehend von ethylenisch ungesättigten Mono- oder Dicarbonsäureanhydriden, gegebenenfalls im Gemisch mit den erwähnten Carbonsäuren, erhalten werden. Die Anhydridfunktionen werden unter den Polymerisationsbedingungen, beispielsweise bei der Lösungs- oder Emulsionspolymerisation im wässrigen Medium oder im Anschluß an die Polymerisation durch Umsetzung mit einer Säure oder Base in Carbonsäuregruppen überführt. Brauchbare ethylenisch ungesättigte Carbonsäureanhydride sind insbesondere Maleinsäureanhydrid, Itaconsäureanhydrid, Acrylsäureanhydrid und Methacrylsäureanhydrid.

Besonders bevorzugte Monomere für die Herstellung der Komponente B sind Acrylsäure, Methacrylsäure, Methacrylsäureanhydrid, Maleinsäure, Maleinsäureanhydrid, Methylmethacrylat, tert.-Butylmethacrylat, Ethylacrylat, n-Butylacrylat, 2-Hydroxyethylacrylat, Styrol und Acrylamido-2-methylpropansulfonsäure.

Neben den Mono- oder Dicarbonsäuren kann das Polymerisat (B) noch 0 bis 85 Gew.-%, vorzugsweise 0 bis 80 Gew.-% und insbesondere 0 bis 60 Gew.-% mindestens eines weiteren Monomers einpolymerisiert enthalten. Brauchbare Monomere wurden bereits oben im Zusammenhang mit Komponente (A) (dort als Monomere b bezeichnet) genannt. Die Durchführung der Polymerisation und Hilfsstoffe wurden bereits oben im Zusammenhang mit Komponente (A) beschrieben.

Zusätzlich zu den oben im Zusammenhang mit Komponente (A) genannten Polymerisationsverfahren können die Polymerisate (B) auch durch Lösungspolymerisation erhalten werden.

Bei Anwendung der wässrigen radikalischen Lösungspolymerisation erhält man wasserlösliche Polymere und Copolymere, vorzugsweise ausgehend von 50 bis 100 Gew.-% der erwähnten Carbonsäuren, Carbonsäureanhydride, Halbester oder einer Mischung von zwei oder mehreren dieser Verbindungen. Ihr gewichtsmittleres Molekulargewicht liegt im allgemeinen im Bereich von 500 bis 1 000 000, vorzugsweise 2000 bis 200 000. Die K-Werte der Polymerisate liegen im allgemeinen im Bereich von 10 bis 150, vorzugsweise 15 bis 100 (gemessen in 1 gew.-%iger Lösung in Wasser). Der Feststoffgehalt liegt im allgemeinen im Bereich von 10 bis 80 Gew.-%, vorzugsweise 20 bis 65 Gew.-%. Die Polymerisation kann bei Temperaturen von 20 bis 300, vorzugsweise von 60 bis 200°C durchgeführt werden. Die Durchführung der Lösungspolymerisation erfolgt in üblicher 5 Weise, z.B. wie in der EP-A-75 820 oder DE-A-36 20 149 beschrieben.

Das Polymerisat (B) kann auch durch Pfropfung von Maleinsäure bzw. Maleinsäureanhydrid bzw. einer Maleinsäure oder Maleinsäureanhydrid enthaltenden Monomermischung auf eine Pfropfgrundlage erhalten werden. Geeignete Pfropfgrundlagen sind beispielsweise Monosaccharide, Oligosaccharide, modifizierte Polysaccharide und Alkylpolyglykolether. Solche Pfropfpolymerisate sind beispielsweise in DE-A-4 003 172 und EP-A-116 930 beschrieben.

### Komponente (C):

Als Komponente (C) sind Alkanolamine der Formel geeignet: 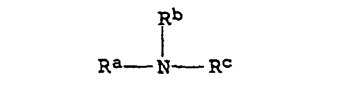 in der R^{a} für ein H-Atom, eine C₁-C₁₀-Alkylgruppe oder eine C₁-C₁₀-Hydroxyalkylgruppe steht und R^{b} und R^{c} für eine C₁-C₁₀-Hydroxyalkylgruppe stehen.

Besonders bevorzugt stehen R^{b} und R^{c} unabhängig voneinander für eine C₂-C₅-Hydroxyalkylgruppe und R^{a} für ein H-Atom, eine C₁-C₅-Alkylgruppe oder eine C₂-C₅-Hydroxyalkylgruppe.

Als Verbindungen der Formel I seien z.B. Diethanolamin, Triethanolamin, Diisopropanolamin, Triisopropanolamin, Methyldiethanolamin, Butyldiethanolamin und Methyldiisopropanolamin genannt. Besonders bevorzugt ist Triethanolamin.

Weiterhin geeignet sind Alkanolamine, die ausgewählt sind unter wasserlöslichen, linearen oder verzweigten aliphatischen Verbindungen, die pro Molekül wenigstens zwei funktionelle Aminogruppen vom Typ (a) oder vom Typ (b) 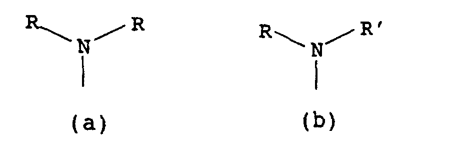 worin R für Hydroxyalkyl steht und R' für Alkyl steht, enthalten. Dabei handelt es sich vorzugsweise um mindestens eine Verbindung der Formel I: 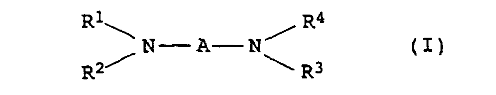 worin
- A: für C₂-C₁₈-Alkylen steht, das gegebenenfalls substituiert ist durch ein oder mehrere Gruppen, die unabhängig voneinander ausgewählt sind unter Alkyl, Hydroxyalkyl, Cycloalkyl, OH und NR⁶R⁷, wobei R⁶ und R⁷ unabhängig voneinander für H, Hydroxyalkyl oder Alkyl stehen,
und das gegebenenfalls unterbrochen ist durch ein oder mehrere Sauerstoffatome und/oder NR⁵-Gruppen, wobei R⁵ für H, Hydroxyalkyl, (CH₂)ₙNR⁶R⁷, wobei n für 2 bis 5 steht und R⁶ und R⁷ die oben angegebenen Bedeutungen besitzen, oder Alkyl, das seinerseits durch ein oder mehrere NR⁵-Gruppen, wobei R⁵ die oben angegebenen Bedeutungen besitzt, unterbrochen und/oder durch ein oder mehrere NR⁶R⁷-Gruppen substituiert ist, wobei R⁶ und R⁷ die oben angegebenen Bedeutungen besitzen, steht;
oder A für einen Rest der Formel steht: 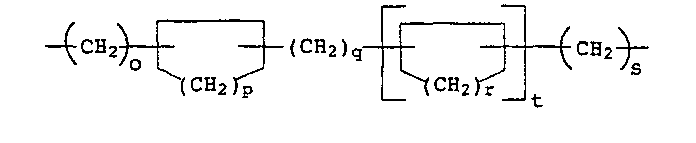 worin
o, q und s unabhängig voneinander für 0 oder eine ganze Zahl von 1 bis 6 stehen,
p und r unabhängig voneinander für 1 oder 2 stehen und
t für 0,1 oder 2 steht, wobei die cycloaliphatischen Reste auch durch 1, 2 oder 3 Alkylreste substituiert sein können und
- R¹, R² und R³ und R⁴: unabhängig voneinander für H, Hydroxyalkyl, Alkyl oder Cycloalkyl stehen, wobei die Verbindungen pro Molekül mindestens zwei, vorzugsweise mindestens drei Hydroxyalkylgruppen aufweisen.

Als Komponente (C) besonders bevorzugt sind:

### (1) Verbindungen der Formel Ia

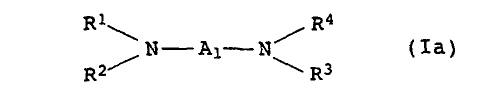

worin
- A₁: für C₂-C₁₂-Alkylen steht, das gegebenenfalls durch mindestens eine Alkylgruppe und/oder mindestens eine NR⁶R⁷-Gruppe substituiert ist, wobei R⁶ und R⁷ unabhängig voneinander für Alkyl oder Hydroxyalkyl stehen und
- R¹, R², R³ und R⁴: unabhängig voneinander für Hydroxyalkyl oder H stehen oder einer der Reste R¹ und R² und/oder einer der Reste R³ und R⁴ für Alkyl oder Cycloalkyl steht.

Besonders brauchbare Verbindungen dieses Typs sind die Verbindungen der folgenden Formeln: 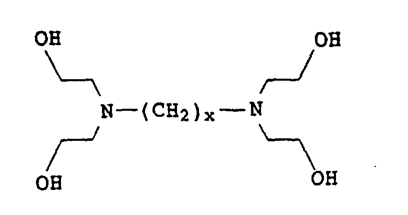 worin x für 2 bis 12, insbesondere 2, 3, 6, 8, 10 oder 12 steht,

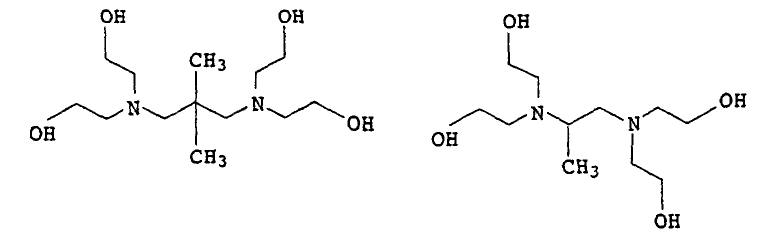

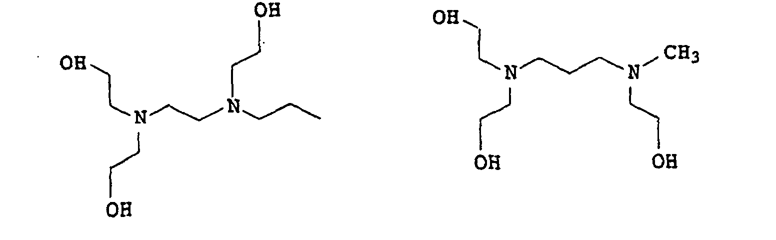

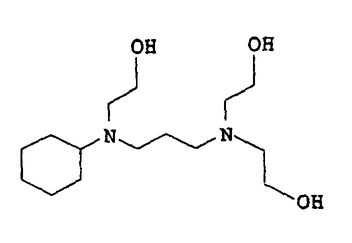

Verbindungen der Formel Ia sind auch die Aminale der Formel

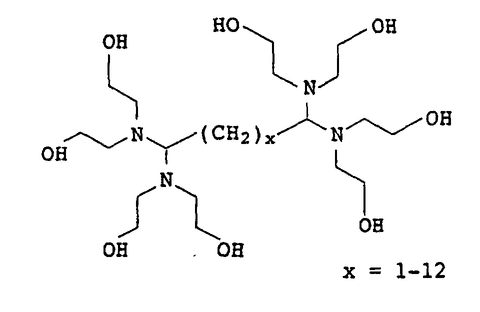

### (2) Verbindungen der Formel Ib

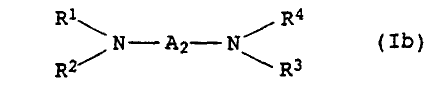

worin
- A₂: für C₂-C₈-Alkylen steht, das durch mindestens eine NR⁵-Gruppe unterbrochen ist, wobei R⁵ (oder die Reste R⁵ unabhängig voneinander) für Hydroxyalkyl oder Alkyl steht (stehen) und
- R¹, R², R³ und R⁴: unabhängig voneinander für Hydroxyalkyl oder H stehen.

Vorzugsweise ist der Rest A₂ durch ein oder zwei Gruppen NR⁵ unterbrochen. Besonders brauchbare Verbindungen dieses Typs sind die Verbindungen der folgenden Formeln:

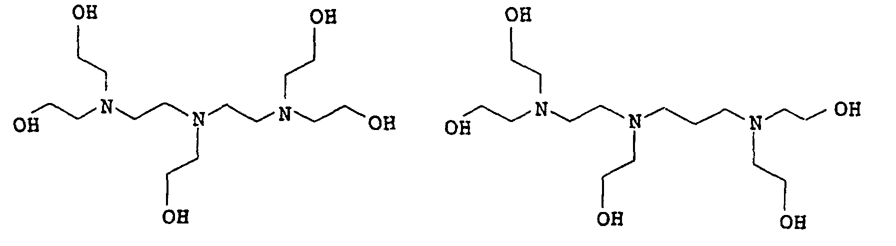

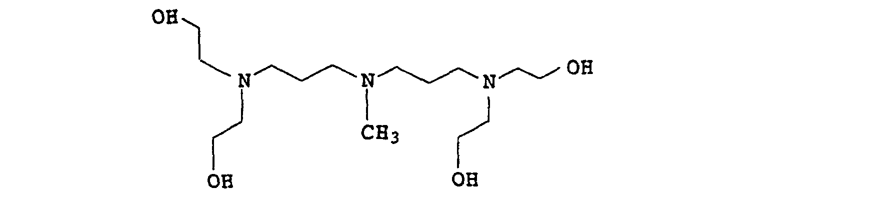

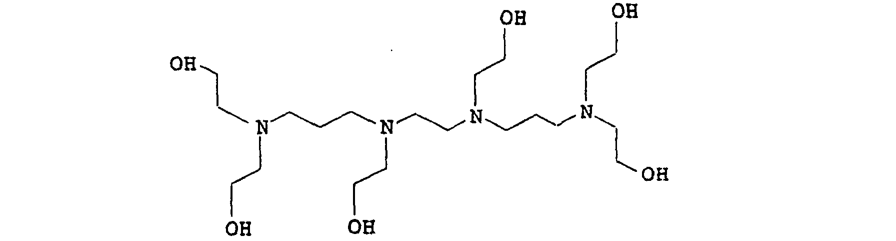

### (3) Verbindungen der Formel Ic:

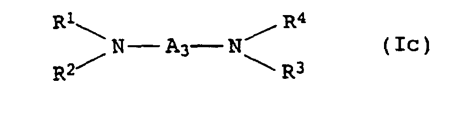

worin
- A₃: für C₂-C₈-Alkylen steht, das durch mindestens eine NR⁵-Gruppe unterbrochen ist, wobei R⁵ für H, Hydroxyalkyl oder CH₂CH₂NR⁶R⁷ steht,
- R¹, R², R³ und R⁴: unabhängig voneinander für Alkyl stehen, das gegebenenfalls durch mindestens eine NR⁵-Gruppe unterbrochen und/oder durch mindestens eine NR⁶R⁷-Gruppe substituiert ist,
- R⁵: für H, Hydroxyalkyl oder -R⁸NR⁶R⁷ steht und
- R⁶ und R⁷: unabhängig voneinander für H, Hydroxyalkyl oder -R⁸NR⁶R⁷ stehen,
- R⁸: für einen Ethylen- oder Propylenrest steht,
wobei (durchschnittlich) wenigstens 30%, insbesondere > 60% und bevorzugt > 80% der (hydroxyalkylierbaren) N-Atome eine Hydroxyalkylgruppe tragen.

Vorzugsweise ist die C₂-C₈-Alkylengruppe durch mindestens zwei Gruppen NR⁵ unterbrochen. Besonders brauchbare Verbindungen dieses Typs sind Umsetzungsprodukte von Ethylenoxid mit Polyethyleniminen verschiedener Molekulargewichte mit mehreren Strukturelementen NR⁶R⁷ und NR⁵. Brauchbare Polyethylenimine sind solche, deren gewichtsmittleres Molekulargewicht im Bereich von 400 bis 2 000 000 liegt. Die nachfolgende schematische Formel soll die Verbindung dieses Typs erläutern: 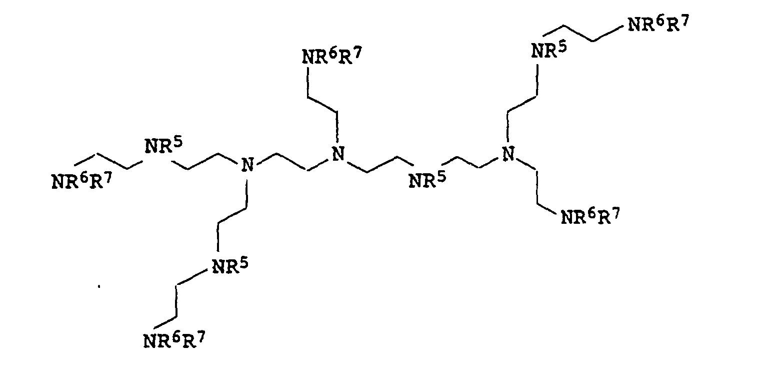 worin
R⁵ für H, Hydroxyethyl oder -R⁸NR⁶R⁷ steht und R⁶ und R⁷ für H, Hydroxyethyl oder -R⁸NR⁶R⁷ und R⁸ für (CH₂)₂ steht, wobei im Mittel > 40%, insbesondere > 60% und besonders bevorzugt > 80% der ethoxilierbaren NH-Funktionen des Polyethylenimins mit Ethylenoxid umgesetzt sind.

### (4) Verbindungen der Formel Ie

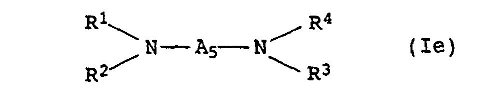

worin
- A₅: für C₆-C₁₈-Alkylen steht, das durch mindestens eine NR⁵-Gruppe unterbrochen ist, wobei R⁵ für (CH₂)ₙNR⁶R⁷ oder Alkyl steht, das gegebenenfalls durch wenigstens eine NR⁵-Gruppe, worin R⁵ für (CH₂)ₙR⁶R⁷ oder Alkyl steht, unterbrochen und/oder durch mindestens eine NR⁶R⁷-Gruppe substituiert ist,
- n: für 2 oder 3 steht und
- R¹, R², R³, R⁴, R⁶ und R⁷: unabhängig voneinander für Hydroxyalkyl oder H stehen.

Besonders brauchbare Verbindungen dieses Typs sind Polyamine der Formeln:

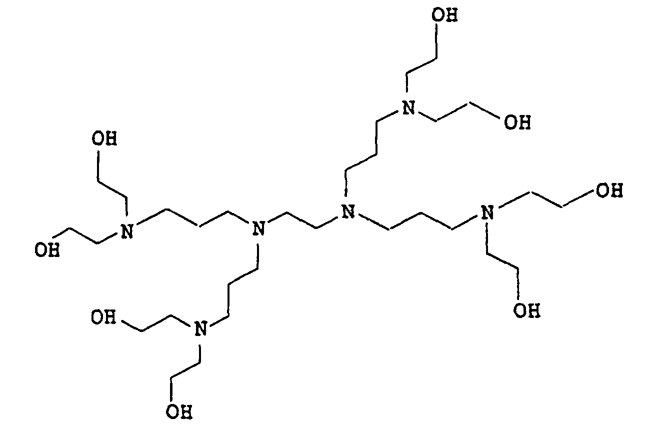

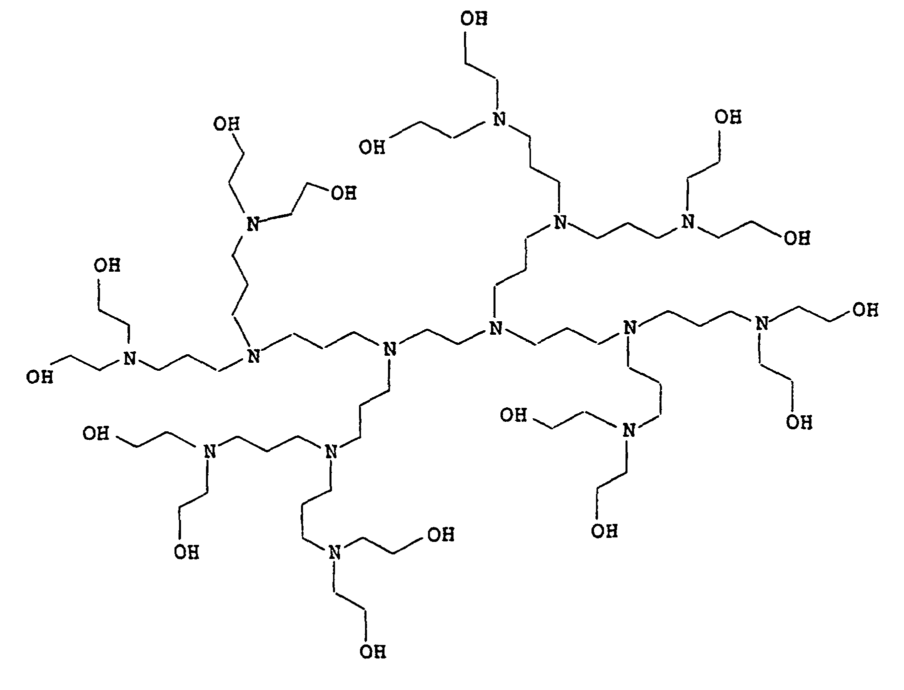

### (5) Verbindungen der Formel If

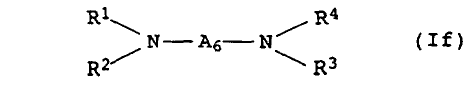

worin
- A₆: für C₂-C₁₂-Alkylen steht, das durch mindestens ein Sauerstoffatom unterbrochen ist und
- R¹, R², R³ und R⁴: unabhängig voneinander für Hydroxyalkyl oder H stehen.

Vorzugsweise ist die Alkylenkette durch 1, 2 oder 3 Sauerstoffatome unterbrochen. Besonders brauchbare Verbindungen dieses Typs sind die Verbindungen folgender Formeln:

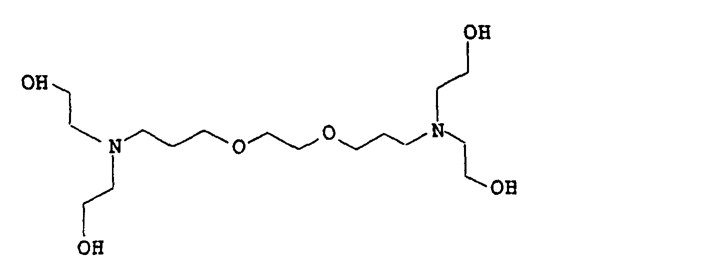

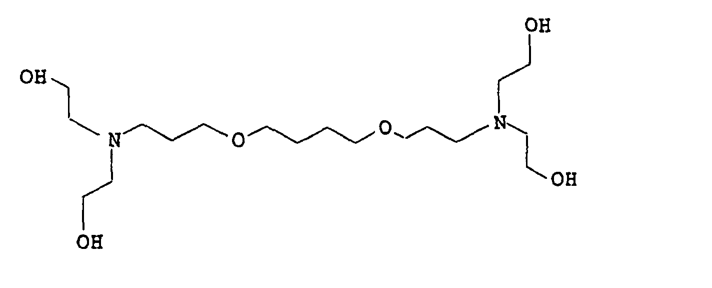

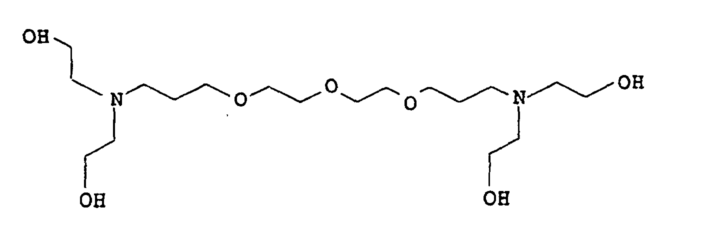

### (6) Verbindungen der Formel Ig,

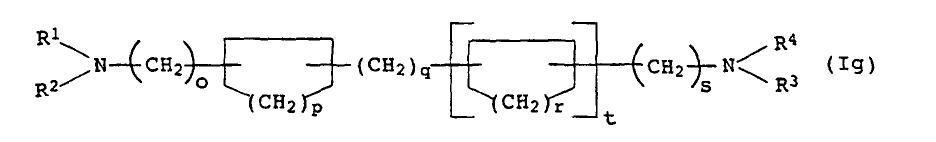

worin
o, q und s unabhängig voneinander für 0 oder eine ganze Zahl im Bereich von 1 bis 6 stehen;
p und r unabhängig voneinander für 1 oder 2 stehen und
t für 0,1 oder 2 steht,
wobei die cycloaliphatischen Ringe auch durch 1, 2 oder 3 Alkylreste substituiert sein können, und
R¹, R², R³ und R⁴ unabhängig voneinander für Hydroxyalkyl oder H stehen.

Besonders brauchbare Verbindungen dieses Typs sind

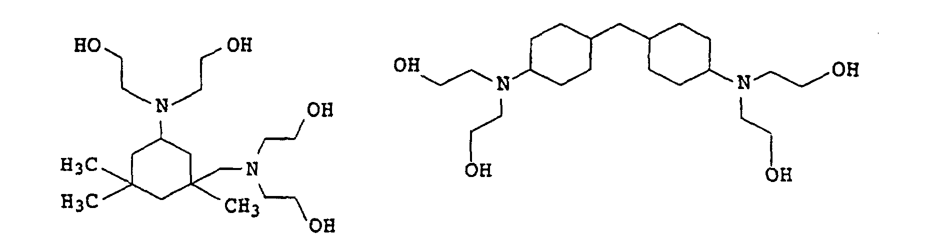

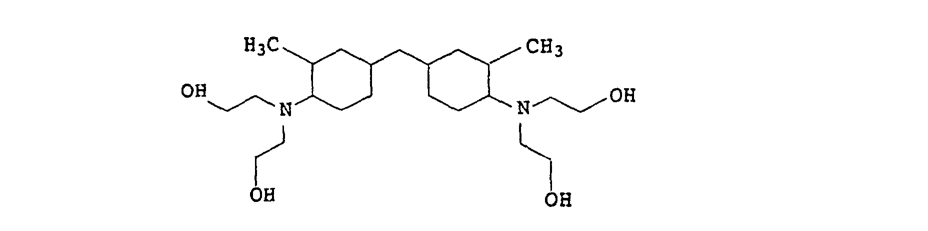

### (7) Polyalkanolamine, die erhältlich sind durch Kondensation von Di- oder Trialkanolaminen mit sich selbst oder untereinander, gegebenenfalls in Gegenwart von ein- bzw. mehrwertigen Alkoholen oder ein- bzw. mehrwertigen Aminen.

Ein Beispiel für derartige oligomere oder polymere Verbindungen ist das aus Triethanol hergestellte Kondensationsprodukt, das idealisiert durch folgende schematische Formel wiedergegeben wird:

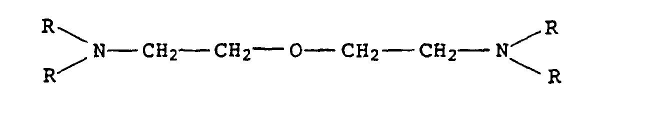

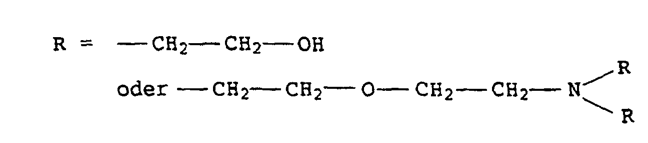

Die Verbindungen der Formeln Ia, Ib (ausgenommen die erwähnten Aminale), Ic, Id, Ie, If und Ig können durch Umsetzung der entsprechenden Polyamine mit Alkylenoxiden hergestellt werden.

Die Umsetzung von Aminen mit Alkylenoxiden, insbesondere Ethylenoxid und Propylenoxid, zu den entsprechenden Alkanolaminen ist im Prinzip bekannt. Hierzu werden die Amine in Anwesenheit eines Protonendonors - im allgemeinen Wasser - mit den Alkylenoxiden, vorzugsweise bei Temperaturen zwischen 30 und 120°C, unter Normaldruck oder unter erhöhtem Druck, vorzugsweise bei 1 bis 5 bar, umgesetzt, indem pro zu oxalkylierender N-H-Funktion etwa ein Äquivalent des Alkylenoxids eingesetzt wird. Zur möglichst vollständigen Oxalkylierung kann ein geringer Überschuß an Alkylenoxid verwendet werden, vorzugsweise setzt man aber die stöchiometrische Menge oder sogar einen leichten Unterschuß des Alkylenoxids gegenüber den N-H-Funktionen ein. Die Oxalkylierung kann mit einem Alkylenoxid oder mit einem Gemisch von zwei oder mehreren Alkylenoxiden erfolgen. Wahlweise kann die Alkoxylierung mit zwei oder mehr Alkylenoxiden auch nacheinander erfolgen.

Außer Wasser kommen als Katalysatoren auch Alkohole oder Säuren in Frage, bevorzugt ist aber Wasser (zur Oxalkylierung von Aminen vgl. N.Schönfeld, Grenzflächenaktive Ethylenoxid-Addukte, S. 29-33, Wissenschaftliche Verlagsgesellschaft mbH, Stuttgart 1976 bzw. S.P. McManus et al., Synth. Comm. 3, 177 (1973)).

Die als Katalysator und/oder Lösemittel eingesetzte Wassermenge kann je nach Anforderung und Bedarf schwanken. Bei flüssigen, niedrigviskosen Aminen reichen Wassermengen zwischen 1 und 5 % aus, um die Reaktion zu katalysieren. Feste, hochviskose oder polymere Amine setzt man vorteilhaft in Wasser gelöst oder dispergiert um; die Wassermenge kann dann zwischen 10 und 90 % betragen.

Unter den beschriebenen Bedingungen für die Oxalkylierung in Gegenwart von Wasser werden im wesentlichen nur die -NH-Gruppen umgesetzt. Eine Oxalkylierung der entstehenden OH-Gruppen findet in der Regel nicht statt, so daß im wesentlichen eine Monoalkoxylierung der NH-Gruppen abläuft (d.h. pro mol NH wird maximal 1 mol Alkylenoxid addiert).

Der mittlere Alkoxylierungsgrad der aktiven NH-Gruppen ist bei Verbindungen mit weniger als 5 Stickstoffatomen pro Molekül vorzugsweise > 75%.

Als Ausgangspolyamine kann man beispielsweise verwenden α,ω-Oligomethylendiamine, wie 1,2-Ethylendiamin, 1,3-Propandiamin, 1,6-Hexamethylendiamin, 1,8-Oktamethylendiamin, 1,12-Dodecamethylendiamin, 2,2-Dimethyl-1,3-propandiamin, 1,2-Propandiamin, 2-(Ethylamino)ethylamin, 2-(Methylamino)-propylamin, N-(2-Aminoethyl)-1,2-ethanediamin, N-(2-Aminoethyl)-1,3-propandiamin, N-(2-Aminoethyl)-N-methylpropanediamin, N,N-Bis-(3-Aminopropyl)-ethylendiamin, 4-Aminoethyl-1,8-octandiamin, 2-Butyl-2-ethyl-1,5-pentandiamin, 2,2,4-Trimethylhexamethylendiamin, 2-Methylpentamethylendiamin, 1,3-Diaminopentan, 3-Isopropylaminopropylamin, Triethylenetetramin oder Tetraethylenpentamin.

Oligo- und Poly-N-(β-hydroxyethyl)aminoverbindungen (Aminale) können auch durch Kondensation von aliphatischen Dialdehyden und Diethanolamin hergestellt werden.

Zu Poly-N-(β-hydroxyethyl)aminoverbindungen (8) gelangt man, wie beispielsweise in der US-A-4,505,839 und der DE-A-3 206 459 beschrieben, durch thermische Kondensation von Triethanolamin zu Poly(triethanolamin) oder durch thermische Kondensation von Alkanolaminen zu hydroxylgruppenhaltigen Polyethern. Die Kondensation der Alkanolamine kann auch, wie in DE-A-1 243 874 beschrieben, in Gegenwart ein- bzw. mehrwertiger primärer oder sekundärer Amine oder ein- bzw. mehrwertiger Alkohole erfolgen. Je nach Kondensationsbedingungen kann das Molekulargewicht dieser Produkte und damit ihre Viskosität im breiten Rahmen variiert werden.

Die gewichtsmittleren Molekulargewichte dieser Polykondensate liegen üblicherweise zwischen 200 und 100 000.

Die Verbindungen der Formeln Ie können durch Alkoxylierung aus sogenannten Dendrimer-Polyaminen hergestellt werden, deren Synthese durch Michael-Addition von aliphatischen Diaminen an Acrylnitril und anschließende katalytische Hydrierung in der WO 93/14147 beschrieben ist. Ein Beispiel hierfür ist das hydrierte Addukt von 4 mol Acrylnitril und Ethylendiamin. Dieses Hexamin mit 4 primären Aminogruppen kann auf analoge Weise weiter umgesetzt werden zu dem N-14-Amin mit 8 primären Aminogruppen. Anstelle von Ethylendiamin können auch andere aliphatische Diund Polyamine eingesetzt werden.

Auch Aminogruppen enthaltende Polymere, wie Polyethylenimin, lassen sich zu den Verbindungen der Formel Ic mit Ethylenoxid in wässriger Lösung zu brauchbaren Poly-N-(β-hydroxyethyl)aminoverbindungen umsetzen, wobei der Umsetzungsgrad der vorhandenen NH-Funktionen im allgemeinen > 40%, insbesondere > 60% und bevorzugt > 80% ist. Die Herstellung von Polyethylenimin ist allgemein bekannt. Polyethylenimine im Molekulargewichtsbereich M_{w} = 800 bis 2 000 000 sind beispielsweise von der Fa. BASF unter der Bezeichnung Lupasol® erhältlich. Polyethylenimine bestehen in der Regel aus verzweigten Polymerketten und enthalten daher primäre, sekundäre und tertiäre Aminogruppen. Deren Verhältnis liegt üblicherweise bei ca. 1:2:1. Bei sehr niedrigen Molekulargewichten sind jedoch auch höhere Anteile primärer Aminogruppen möglich. Auch weitgehend lineare Polyethylenimine, die über spezielle Herstellverfahren zugänglich sind, sind für diese Anwendung geeignet.

Polymere Alkylenimine mit primären und/oder sekundären Aminogruppen, die nach Oxalkylierung in den erfindungsgemäßen Zusammensetzungen verwendet werden können, sind beschrieben in "Encyclopedia of Polymer Science and Engineering", H. Mark (Editor), Revised Edition, Volume 1, S. 680-739, John Wiley & Sons Inc., New York, 1985;

Es ist auch möglich, Hydroxyalkyl-substituierte Polyalkylenimine durch Polymerisation von N-Hydroxyalkylaziridinen herzustellen.

Weiterhin können auch oxalkylierte Allylamin-Polymere und -Copolymere in den erfindungsgemäßen Zusammensetzungen verwendet werden.

Die Verbindungen der Formel If lassen sich ausgehende von Oxaminen, wie 4,7-Dioxadecan-1,10-diamin, 4,9-Dioxadecan-1,12-diamin, 4,11-Dioxatetradecan-1,14-diamin, 4,9-Dioxadodecan-1,12-diamin, 4,7,10-Trioxatridecan-1,13-diamin herstellen. Geeignete Ausgangsamine sind auch Polyoxyalkylenamine, die von der Fa. Huntsman unter der Bezeichnung Jeffamine® vertrieben werden. Beispiele hierfür sind die Diamine, Jeffamine D-230, Jeffamine-D-400, Jeffamine D-2000, Jeffamine D-4000, Jeffamine ED-600, Jeffamine ED-900, Jeffamine ED-2001, Jeffamine EDR-148 sowie die Triamine Jeffamine T-403, Jeffamine T-3000 und Jeffamine T-5000.

Umsetzungsprodukte von aromatischen Polyaminen mit Alkylenoxid sind prinzipiell auch für die Verwendung in den erfindungsgemäßen Zusammensetzungen geeignet.

Die Komponente (A) und die Komponente (B) werden vorzugsweise in einem Gewichtsverhältnis (A:B) eingesetzt, das im Bereich von 50:1 bis 1:50, vorzugsweise 20:1 bis 1:20, insbesondere 1:15 bis 15:1 und besonders bevorzugt 5:1 bis 1:5, liegt (bezogen auf aktive Inhaltsstoffe).

Das Gewichtsverhältnis von Komponente (B) zu Komponente (C) liegt vorzugsweise im Bereich von 100:1 bis 1:1, vorzugsweise 50:1 bis 15:1 und besonders bevorzugt 30:1 bis 2:1 (jeweils bezogen auf aktive Inhaltsstoffe).

Die Herstellung der Zusammensetzungen erfolgt durch Vermischen der Komponenten bei Raumtemperatur oder auch bei erhöhter Temperatur. Es hat sich als besonders zweckmäßig erwiesen, die Komponente (A) als wässrige Dispersion und die Komponente (B) als wässrige Lösung einzusetzen. Hierzu legt man besonders bevorzugt die Komponente (b) als wässrige Lösung vor und gibt dazu unter Rühren die Komponente (A) als wässrige Dispersion. Die Komponente (C) kann unverdünnt oder als wässrige Lösung verwendet werden, deren Konzentration vorzugsweise > 25% ist.

Die Viskosität der erfindungsgemäßen wässrigen Zusammensetzungen liegt bei einem Gehalt von aktiven Inhaltsstoffen von 40 Gew.-% (Summe der Komponenten A und B) im allgemeinen im Bereich von 10 bis 100 000 mPa.s, gemessen in einem Rotationsviskosimeter gemäß DIN 53019 bei 23°C und einer Schergeschwindigkeit von 250 sec⁻¹. Bevorzugt sind Viskositäten von 20 bis 20000 mPa.s, besonders bevorzugt von 50 bis 5000 mPa.s.

Ist die Komponente (A) bzw. (B) ein Emulsionspolymerisat, so lassen sich damit bei vergleichbarem Molekulargewicht oder K-Wert Zusammensetzungen mit niedrigerer Viskosität herstellen als mit homogen gelösten, säurehaltigen Polymerisaten.

Die erfindungsgemäßen Zusammensetzungen können einen Reaktionsbeschleuniger enthalten, vorzugsweise jedoch liegen sie ohne einen derartigen Reaktionsbeschleuniger vor. Geeignete Reaktionsbeschleuniger sind z.B. Alkalimetallhypophosphite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Weiterhin sind als Katalysatoren geeignet starke Säuren wie z.B. Schwefelsäure, p-Toluolsulfonsäure. Auch polymere Sulfonsäuren, wie z.B. Poly(acrylamido-2-methylpropansulfonsäure), Poly(vinylsulfonsäure), Poly(p-styrolsulfonsäure), Poly(sulfopropylmethacrylat) und polymere Phosphonsäuren wie z.B. Poly(vinylphosphonsäure) sowie davon abgeleitete Copolymere mit den oben beschriebenen Comonomeren sind geeignet.

Es ist weiterhin möglich, die beschleunigend wirkenden Sulfonsäuren oder Phosphonsäuren in das säurehaltige Polymerisat (B) einzubauen, indem man die entsprechenden Monomere wie z.B. Acrylamido-2-methylpropansulfonsäure, Vinylsulfonsäure, p-Styrolsulfonsäure, Sulfopropylmethacrylat oder Vinylphosphonsäure bei der Herstellung der polymeren Carbonsäuren als Comonomer verwendet.

Weiterhin als Katalysatoren geeignet sind Organotitanate und Organzirkonate wie z.B. Triethanoltitanat, Titanchelat ETAM und Tetrabutylzirkonat, die z.B. von der Fa. Hüls vertrieben werden.

Weiter können die erfindungsgemäßen Zusammensetzungen übliche Zusätze je nach Anwendungszweck enthalten. Beispielsweise können sie Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdickungsmittel, Plastifizierungsmittel, Retentionsmittel, Pigmente und Füllstoffe enthalten.

Schließlich können die erfindungsgemäßen Zusammensetzungen übliche Brandschutzmittel, wie z.B. Aluminiumsilikate, Aluminiumhydroxide, Borate und/oder Phosphate enthalten.

Häufig enthalten die Zusammensetzungen auch Kupplungsreagenzien, wie Alkoxysilane, beispielsweise 3-Aminopropyltriethoxysilan, lösliche oder emulgierbare Öle als Gleitmittel und Staubbindemittel sowie Benetzungshilfsmittel.

Die erfindungsgemäßen Zusammensetzungen können auch in Abmischung mit Bindemitteln, wie beispielsweise Harnstoff-Formaldehyd-Harzen, Melamin-Formaldehyd-Harzen, Epoxidharze oder Phenol-Formaldehyd-Harzen, eingesetzt werden.

Die erfindungsgemäßen Zusammensetzungen sind formaldehydfrei. Formaldehydfrei bedeutet, daß die erfindungsgemäßen Zusammensetzungen keine wesentlichen Mengen an Formaldehyd enthalten und auch bei Trocknung und/oder Härtung keine wesentlichen Mengen an Formaldehyd freigesetzt werden. Im allgemeinen enthalten die Zusammensetzungen < 100 ppm Formaldehyd. Sie ermöglichen die Herstellung von Formkörpern mit kurzer Härtungszeit und verleihen den Formkörpern ausgezeichnete mechanische Eigenschaften.

Die erfindungsgemäßen thermisch härtbaren, formaldehydfreien Zusammensetzungen sind bei der Anwendung im wesentlichen unvernetzt und daher thermoplastisch. Wenn erforderlich, kann jedoch ein geringer Grad an Vorvernetzung eingestellt werden.

Beim Erhitzen verdampft das in der Zusammensetzung enthaltene Wasser und es kommt zur Härtung der Zusammensetzung. Diese Prozesse können nacheinander oder gleichzeitig ablaufen. Unter Härtung wird in diesem Zusammenhang die chemische Veränderung der Zusammensetzung verstanden, z.B. die Vernetzung durch Knüpfung von kovalenten Bindungen zwischen den verschiedenen Bestandteilen der Zusammensetzungen, Bildung von ionischen Wechselwirkungen und Clustern, Bildung von Wasserstoffbrücken. Weiterhin können bei der Härtung auch physikalische Veränderungen im Bindemittel ablaufen, wie z.B. Entmischungsprozesse, Phasenumwandlungen oder Phaseninversion.

Als Folge der Härtung nimmt die Löslichkeit der Zusammensetzung ab, beispielsweise werden wasserlösliche Zusammensetzungen in teilweise bis weitgehend wasserunlösliche Materialien überführt.

Der Härtungsgrad läßt sich charakterisieren durch Extraktionsversuche an den gehärteten Zusammensetzungen in geeigneten Lösungsmitteln wie z.B. Wasser oder Aceton. Je höher der Aushärtungsgrad, desto mehr gehärtetes Material bleibt unlöslich, d.h. desto höher ist sein Gelanteil.

Die Härtungstemperaturen liegen zwischen 75 und 250°C, bevorzugt zwischen 90 und 200°C. Die Dauer und die Temperatur der Erwärmung beeinflussen den Aushärtungsgrad. Ein Vorteil der erfindungsgemäßen Zusammensetzungen ist, daß ihre Härtung bei vergleichsweise niedrigen Temperaturen erfolgen kann. So findet beispielsweise schon bei 100 bis 130°C eine deutliche Vernetzung statt.

Die Aushärtung kann auch in zwei oder mehr Stufen erfolgen. So kann z.B. in einem ersten Schritt die Härtungstemperatur und -zeit so gewählt werden, daß nur ein geringer Härtungsgrad erreicht wird und weitgehend vollständige Aushärtung in einem zweiten Schritt erfolgt. Dieser zweite Schritt kann räumlich und zeitlich getrennt vom ersten Schritt erfolgen. Dadurch wird beispielsweise die Verwendung der erfindungsgemäßen Zusammensetzungen zur Herstellung von mit Bindemittel imprägnierten Halbzeugen möglich, die an anderer Stelle verformt und ausgehärtet werden können.

Die Zusammensetzungen werden insbesondere als Bindemittel für die Herstellung von Formkörpern aus Fasern, Schnitzeln oder Spänen verwendet. Dabei kann es sich um solche aus nachwachsenden Rohstoffen oder um synthetische oder natürliche Fasern, z.B. aus Kleiderabfällen handeln. Als nachwachsende Rohstoffe seien insbesondere Sisal, Jute, Flachs, Kokosfasern, Bananenfasern, Hanf und Kork genannt. Besonders bevorzugt sind Holzfasern oder Holzspäne.

Die Formkörper haben bevorzugt eine Dichte von 0,2 bis 1,0 g/cm³ bei 23°C.

Als Formkörper kommen insbesondere Platten in Betracht. Die Dicke der Platten beträgt im allgemeinen mindestens 1 mm, vorzugsweise mindestens 2 mm. In Betracht kommen auch Automobilinnenteile, z.B. Türinnenverkleidungen, Armaturenträger, Hutablagen.

Die Gewichtsmenge des verwendeten Bindemittels beträgt im allgemeinen 0,5 bis 40 Gew.-%, vorzugsweise 1 bis 30 Gew.-% (Bindemittel fest, berechnet als Summe A + B), bezogen auf das Substrat (Fasern, Schnitzel oder Späne).

Die Fasern, Schnitzel oder Späne können direkt mit dem Bindemittel beschichtet werden oder mit dem wässrigen Bindemittel vermischt werden. Die Viskosität des wässrigen Bindemittels wird vorzugsweise (insbesondere bei der Herstellung von Formkörpern aus Holzfasern oder Holzspänen) auf 10 bis 10 000, besonders bevorzugt auf 50 bis 5 000 und ganz besonders bevorzugt auf 100 bis 2500 mPa·s (DIN 53019, Rotationsviskosimeter bei 250 sec⁻¹) eingestellt.

Die Mischung aus Fasern, Schnitzeln und Spänen und dem Bindemittel kann z.B. bei Temperaturen von 10 bis 150°C vorgetrocknet werden und anschließend zu den Formkörpern, z.B. bei Temperaturen von 50 bis 250°C, vorzugsweise 100 bis 240°C und besonders bevorzugt 120 bis 225°C und Drücken von im allgemeinen 2 bis 1000 bar, vorzugsweise 10 bis 750 bar, besonders bevorzugt 50 bis 500 bar zu den Formkörpern verpreßt werden.

Die Bindemittel eignen sich insbesondere zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz, wie z.B. Holzspänen und Holzfasern, hergestellt werden können. Die Wasserfestigkeit von Holzwerkstoffen kann erhöht werden, indem man dem Bindemittel eine handelsübliche wässrige Paraffindispersion oder andere Hydrophobierungsmittel zusetzt, bzw. diese Hydrophobierungsmittel vorab oder nachträglich den Fasern, Schnitzeln oder Spänen zusetzt.

Die Herstellung von Spanplatten ist allgemein bekannt und wird beispielsweise in H.J. Deppe, K. Ernst Taschenbuch der Spanplattentechnik, 2. Auflage, Verlag Leinfelden 1982, beschrieben.

Es werden bevorzugt Späne eingesetzt, deren mittlere Spangröße zwischen 0,1 und 4 mm, insbesondere 0,2 und 2 mm liegt, und die weniger als 6 Gew.-% Wasser enthalten. Es können jedoch auch deutlich grobteiligere Späne und solche mit höherem Feuchtigkeitsgehalt eingesetzt werden. Das Bindemittel wird möglichst gleichmäßig auf die Holzspäne aufgetragen, wobei das GewichtsVerhältnis Bindemittel:Holzspäne bezogen auf die aktiven Inhaltsstoffe (berechnet als A) + B)) vorzugsweise 0,02:1 bis 0,3:1 beträgt. Eine gleichmäßige Verteilung läßt sich beispielsweise erreichen, indem man das Bindemittel in feinverteilter Form auf die Späne aufsprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 100 bis 250°C, bevorzugt von 120 bis 225°C durch Anwendung von Drücken von üblicherweise 10 bis 750 bar zu einer Platte verpreßt. Die benötigten Preßzeiten können in einem weiten Bereich variieren und liegen im allgemeinen zwischen 15 Sekunden bis 30 Minuten.

Die zur Herstellung von mitteldichten Holzfaserplatten (MDF) aus den Bindemitteln benötigten Holzfasern geeigneter Qualität können aus rindenfreien Holzschnitzeln durch Zermahlung in Spezialmühlen oder sogenannten Refinern bei Temperaturen von ca. 180°C hergestellt werden.

Zur Beleimung werden die Holzfasern im allgemeinen mit einem Luftstrom aufgewirbelt und das Bindemittel in den so erzeugten Fasernstrom eingedüst ("Blow-Line" Verfahren). Das Verhältnis Holzfasern zu Bindemittel bezogen auf den Trockengehalt bzw. Feststoffgehalt beträgt üblicherweise 40:1 bis 2:1, bevorzugt 20:1 bis 4:1. Die beleimten Fasern werden in dem Fasernstrom bei Temperaturen von z.B. 130 bis 180°C getrocknet, zu einem Faservlies ausgestreut und bei Drücken von 20 bis 40 bar zu Platten oder Formkörpern verpreßt.

Die beleimten Holzfasern können auch, wie z.B. in der DE-OS 2 417 243 beschrieben, zu einer transportablen Fasermatte verarbeitet werden. Dieses Halbzeug kann dann in einem zweiten, zeitlich und räumlich getrennten Schritt zu Platten oder Formteilen, wie z.B. Türinnenverkleidungen von Kraftfahrzeugen weiterverarbeitet werden.

Auch andere Naturfaserstoffe wie Sisal, Jute, Hanf, Flachs, Kokosfasern, Bananenfasern und andere Naturfasern können mit den Bindemitteln zu Platten und Formkörpern verarbeitet werden. Die Naturfaserstoffe können auch in Mischungen mit Kunststoffasern, z.B. Polypropylen, Polyethylen, Polyester, Polyamide oder Polyacrylnitril verwendet werden. Diese Kunststoffasern können dabei auch als Cobindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10 Gew.-%, bezogen auf alle Späne, Schnitzel oder Fasern. Die Verarbeitung der Fasern kann nach dem bei den Holzfaserplatten praktizierten Verfahren erfolgen. Es können aber auch vorgeformte Naturfasermatten mit den erfindungsgemäßen Bindemitteln imprägniert werden, gegebenenfalls unter Zusatz eines Benetzungshilfsmittels. Die imprägnierten Matten werden dann im bindemittelfeuchten oder vorgetrockneten Zustand z.B. bei Temperaturen zwischen 100 und 250°C und Drücken zwischen 10 und 100 bar zu Platten oder Formteilen verpreßt.

Die erfindungsgemäß erhaltenen Formkörper haben eine geringe Wasseraufnahme, eine niedrige Dickenquellung nach Wasserlagerung, eine gute Festigkeit und sind formaldehydfrei.

Außerdem kann man die erfindungsgemäßen Zusammensetzungen als Bindemittel für Beschichtungs- und Imprägniermassen für Platten aus organischen und/oder anorganischen Fasern, nicht fasrigen mineralischen Füllstoffen sowie Stärke und/oder wässrigen Polymerisatdispersionen verwenden. Die Beschichtungs- und Imprägniermassen verleihen den Platten einen hohen Biegemodul und eine gute Feuchtklimabeständigkeit. Die Herstellung derartiger Platten ist bekannt.

Derartige Platten werden üblicherweise als Schalldämmplatten eingesetzt. Die Dicke der Platten liegt üblicherweise im Bereich von etwa 5 bis 30 mm, bevorzugt im Bereich von 10 bis 25 mm. Die Kantenlänge der quadratischen oder rechteckigen Platten liegt üblicherweise im Bereich von 200 bis 2000 mm.

Ferner können die erfindungsgemäßen Zusammensetzungen in der Beschichtungs- und Imprägnierungstechnologie übliche Hilfsstoffe enthalten. Beispiele hierfür sind feinteilige inerte Füllstoffe, wie Aluminiumsilikate, Quarz, gefällte oder pyrogene Kieselsäure, Leicht- und Schwerspat, Talkum, Dolomit oder Calciumcarbonat; farbgebende Pigmente, wie Titanweiß, Zinkweiß, Eisenoxidschwarz etc., Schauminhibitoren, wie modifizierte Dimethylpolysiloxane, und Haftvermittler sowie Konservierungsmittel.

Die Komponenten (A), (B) und (C) sind in der Beschichtungsmasse im allgemeinen in einer Menge von 1 bis 65 Gew.-% enthalten. Der Anteil der inerten Füllstoffe liegt im allgemeinen bei 0 bis 85 Gew.-%, der Wasseranteil beträgt mindestens 10 Gew.-%.

Die Anwendung der Zusammensetzungen erfolgt in üblicher Weise durch Auftragen auf ein Substrat, beispielsweise durch Sprühen, Rollen, Gießen oder Imprägnieren. Die aufgetragenen Mengen, bezogen auf die Summe der in der Zusammensetzung enthaltenen Komponenten (A) und (B), betragen im allgemeinen 2 bis 100 g/m².

Die einzusetzenden Mengen an Zusatzstoffen sind dem Fachmann bekannt und richten sich im Einzelfall nach den gewünschten Eigenschaften und dem Anwendungszweck.

Die erfindungsgemäßen Zusammensetzungen sind auch als Bindemittel für Dämmstoffe aus anorganischen Fasern, wie Mineralfasern und Glasfasern brauchbar. Solche Dämmstoffe werden technisch durch Verspinnen von Schmelzen der entsprechenden mineralischen Rohstoffe hergestellt, siehe US-A-2,550,465, US-A-2,604,427, US-A-2,830,648, EP-A-354 913 und EP-A-567 480. Die Zusammensetzung wird dann auf die frisch hergestellten, noch heißen anorganischen Fasern aufgesprüht. Das Wasser verdampft dann weitgehend und die Zusammensetzung bleibt im wesentlichen unausgehärtet als Viskosemasse auf den Fasern haften. Eine auf diese Weise hergestellte endlose, bindemittelhaltige Fasermatte wird von geeigneten Förderbändern durch einen Härtungsofen weitertransportiert. Dort härtet die Matte bei Temperaturen im Bereich von ca. 100 bis 200°C zu einer steifen Matrix aus. Nach dem Härten werden die Dämmstoffmatten in geeigneter Weise konfektioniert.

Der überwiegende Anteil der in den Dämmstoffen verwendeten Mineral- oder Glasfasern hat einen Durchmesser im Bereich von 0,5 bis 20 µm und eine Länge im Bereich von 0,5 bis 10 cm.

Die erfindungsgemäßen Zusammensetzungen eignen sich außerdem als Bindemittel für Faservliese.

Als Faservliese seien z. B. Vliese aus Cellulose, Celluloseacetat, Ester und Ether der Cellulose, Baumwolle, Hanf, tierische Fasern, wie Wolle oder Haare und insbesondere Vliese von synthetischen oder anorganischen Fasern, z.B. Aramid-, Kohlenstoff-, Polyacrylnitril-, Polyester-, Mineral-, PVC- oder Glasfasern genannt.

Im Falle der Verwendung als Bindemittel für Faservliese können die erfindungsgemäßen Zusammensetzungen z. B. folgende Zusatzstoffe enthalten: Silikate, Silikone, borhaltige Verbindungen, Gleitmittel, Benetzungsmittel.

Bevorzugt sind Glasfaservliese. Die ungebundenen Faservliese (Rohfaservliese), insbesondere aus Glasfasern, werden durch das erfindungsgemäße Bindemittel gebunden, d.h. verfestigt.

Dazu wird das erfindungsgemäße Bindemittel vorzugsweise im Gewichtsverhältnis Faser/Polymerisat (A) und (B) (fest) von 10:1 bis 1:1, besonders bevorzugt von 6:1 bis 3:1 auf das Rohfaservlies z.B. durch Beschichten, Imprägnieren, Tränken aufgebracht.

Das Bindemittel wird dabei vorzugsweise in Form einer verdünnten wässrigen Zubereitung mit 95 bis 40 Gew.-% Wasser verwendet.

Nach dem Aufbringen des Bindemittels auf das Rohfaservlies erfolgt im allgemeinen eine Trocknung vorzugsweise bei 100 bis 400, insbesondere 130 bis 280°C, ganz besonders bevorzugt 130 bis 230°C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Die erfindungsgemäßen Bindemittel erlauben insbesondere kurze Trocknungszeiten und auch niedrige Trocknungstemperaturen.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z.B. aus PVC.

Bei der Verwendung als Dachbahnen werden die gebundenen Faservliese im allgemeinen mit Bitumen beschichtet.

Aus den erfindungsgemäßen wässrigen Zusammensetzungen lassen sich weiterhin geschäumte Platten oder Formkörper herstellen. Dazu wird zunächst das in der Zusammensetzung enthaltene Wasser bei Temperaturen von < 100°C bis zu einem Gehalt von < 20 Gew.-% entfernt. Die so erhaltene viskose Zusammensetzung wird dann bei Temperaturen > 100°C, vorzugsweise bei 120 bis 300°C, verschäumt. Als Treibmittel dient dabei das in der Mischung noch enthaltene Restwasser und/oder die bei der Härtungsreaktion entstehenden gasförmigen Spaltprodukte. Die entstehenden vernetzten Polymerschäume können beispielsweise zur Wärmedämmung und zur Schallisolierung eingesetzt werden.

Mit den erfindungsgemäßen Zusammensetzungen lassen sich durch Imprägnierung von Papier und anschließende schonende Trocknung nach den bekannten Verfahren sogenannte Laminate, z.B. für dekorative Anwendungen, herstellen. Diese werden in einem zweiten Schritt auf das zu beschichtende Substrat unter Einwirkung von Hitze und Druck auflaminiert, wobei die Bedingungen so gewählt werden, daß es zur Aushärtung des Bindemittels kommt.

Die erfindungsgemäßen Zusammensetzungen sind weiterhin geeignet als formaldehydfreie Kernsandbindemittel zur Herstellung von Gußformen und Kernen für den Metallguß nach den üblichen Verfahren. Sie eignen sich auch als Bindemittel für die Herstellung von Schleifpapieren und Schleifkörpern nach Verfahren, wie sie üblicherweise bei Phenoharzen praktiziert werden.

Die nachfolgenden Beispiele erläutern die Erfindung. In den Beispielen steht FG für den Feststoffgehalt wie er durch den Gewichtsverlust einer definierten Probe durch Trocknen bei 120 °C (2 h) bestimmt wurde. Die Viskosität wurde bei 250 sec⁻¹ nach DIN 53019 bei 23°C bestimmt (Rheomat der Fa. Physica). Der K-Wert der Komponente (B) wurde anhand einer 1 gew.-%-igen wässrigen Lösung des Polymeren analog DIN 53726 bestimmt. Die Bestimmung des gewichtsmittleren Polymerisatteilchendurchmessers für Komponente (B) erfolgte durch quasielastische Lichtstreuung an einer verdünnten Probe der Dispersionen B mittels eines Lichtstreuphotometers (Typ Autosizer der Fa. malvern), die mittels 2 gew.-%-iger wässriger Natriumlaurylsulfatlösung auf einen Feststoffgehalt von 0,01 Gew.-% eingestellt wurde.

### I. Herstellung der Komponente (A)

### Polymerlösung A1

In einem 4 1 Glasgefäß mit Ankerrührer wurden 590 g Wasser, 4,7 g einer 15%igen wässrigen Natriumlaurylsulfatlösung, 35 g Styrol, 35 g Ethylacrylat und 2,1 g Acrylsäure vorgelegt und auf 85°C aufgeheizt. Bei 85 °C wurde zeitgleich mit der Zugabe von Zulauf 1 und Zulauf 2 begonnen. Zulauf 1 bestand aus einer gerührten Emulsion von 550 g Wasser, 88,6 g 15%iger Natriumlaurylsulfat-Lösung, 665 g Styrol, 665 g Ethylacrylat und 40 g Acrylsäure. Zulauf 1 wurde innerhalb von 3 h zudosiert. Zulauf 2 war eine Lösung von 8,4 g Natriumperoxodisulfat in 200 g Wasser und wurde innerhalb von 3,5 h zudosiert. Anschließend wurde auf 70°C abgekühlt. Innerhalb von 1 h wurden dann 14 g einer 10%igen wässrigen Lösung von t-Butylhydroperoxid sowie 6,3 g einer 20%igen wässrigen Hydroxymethansulfonsäure-Natriumsalzlösung zugegeben.
FG: 39%; pH: 3,2; Viskosität: 65 mPas; gewichtsmittlerer Teilchendurchmesser: 196 nm.

### Polymerdispersion A2

In einem 2 1 Polymerisationsgefäß aus Glas, versehen mit einem Ankerrührer wurden 448 g Wasser vorgelegt und auf 80 °C erwärmt. Nach Spülung der Apparatur mit Stickstoff wurden 10 Gew.-% der Gesamtmenge von Zulauf 1 und 20 Gew.-% der Gesamtmenge eines Zulauf 2 auf einmal in das Polymerisationsgefäß gegeben und das Gemisch 15 min bei 80 °C gerührt. Anschließend wurden bei 80 °C innerhalb von 3 h die Restmenge von Zulauf 1 und innerhalb von 3,5 h die Restmenge von Zulauf 2 räumlich getrennt kontinuierlich zugeführt. Es wurde eine Polymerdispersion erhalten, die einen Feststoffgehalt von 45,2%, eine Viskosität von 30 mPas und einen pH-Wert von 2,5 aufwies. Der gewichtsmittlere Teilchendurchmesser des Polymerisats lag bei 163 nm.
- Zulauf 1:: 426 g Wasser
2,9 g 75 gew.-%ige wässrige Phosphonsäure
36 g einer 40 gew.-%igen wässrigen Lösung von ethoxylierten Oleylmonoamin mit einem mittleren Ethoxylierungsgrad von 12
361 g Styrol
217 g Methylmethacrylat
144 g n-Butylacrylat
- Zulauf 2:: 56 g Wasser
1,8 g Azostarter V 50 (Fa. Wako Chemicals GmbH)

### II. Herstellung der Komponente (B)

### Polymerlösung B1:

Analog den Herstellungsbeispielen der EP-A-075 820 wurde ein Copolymerisat aus 55 Gew.-% Acrylsäure und 45 Gew.-% Maleinsäure hergestellt. Als Radikalinitiator wurde Wasserstoffperoxid eingesetzt; die Polymerisationstemperatur lag bei 130 °C. Der Feststoffgehalt der erhaltenen wässrigen Polymerlösung lag bei 50 Gew.-%, der pH-Wert bei 0,8 und die Viskosität bei 110 mPas. Der K-Wert des Polymers betrug 12,4.

### Polymerlösung B2:

analog zur Herstellung der Polymerlösung B1 wurde ein Homopolymerisat aus Acrylsäure hergestellt. Der Feststoffgehalt der erhaltenen wässrigen Polymerlösung lag bei 35 Gew.-%, der pH-Wert bei 1,0 und die Viskosität bei 160 mPas. Der K-Wert des Polymers betrug 24.

### III. Bindemittelzubereitungen

### Beispiel 1 (erfindungsgemäße Zusammensetzung)

Zu 470 g der wässrigen Polymerlösung B1 wurden unter Rühren 70 g Triethanolamin (Komponente C) zugesetzt. Zu der so erhaltenen Mischung wurden innerhalb von 15 Minuten unter Rühren (100 Upm) 200 g der wässrigen Polymerdispersion A1 zugegeben. Der Feststoffgehalt der Zusammensetzung betrug 53 %, der pH-Wert 3,1. Die Viskosität betrug 190 mPas.

### Beispiel 2 (erfindungsgemäße Zusammensetzung)

Zu 400 g der wässrigen Polymerlösung B2 wurden unter Rühren 85 g Triethanolamin (Komponente C) zugesetzt. zu der so erhaltenen Mischung wurden innerhalb von 15 Minuten unter Rühren (100 Upm) 200 g der wässrigen Polymerdispersion A2 gegeben. Der Feststoffgehalt der Zusammensetzung betrug 46 %, der pH-Wert 3,6. Die Viskosität betrug 110 mPas.

### Vergleichsbeispiel 1

Als Bindemittel wurde die Dispersion A1 ohne Zusätze verwendet.

### Vergleichsbeispiel 2

Als Bindemittel wurde die Polymerlösung B1 ohne Zusätze verwendet.

### Vergleichsbeispiel 3

Zu 870 g der wässrigen Polymerlösung B1 wurden unter Rühren 130 g Triethanolamin (Komponente C) zugesetzt. Der Feststoffgehalt der Zusammensetzung betrug 56 %, der pH-Wert 3,4. Die Viskosität wurde zu 580 mPas bestimmt.

### Vergleichsbeispiel 4

Zu 870 g der wässrigen Polymerisat-Dispersion A2 wurden unter Rühren 130 g Triethanolamin (Komponente C) zugesetzt. Der Feststoffgehalt der Zusammensetzung betrug 47 %, der pH-Wert 5,1. Die Viskosität wurde zu 165 mPas bestimmt.

### IV. Prüfung als Bindemittel für Naturfasermatten

Die Bindemittel aus den angegebenen Beispielen und Vergleichsbeispielen wurden durch Zugabe von Wasser auf einen Feststoffgehalt von 25 % verdünnt. Etwa 1 cm dicke Jute/Sisal-Matten (Hersteller Braunschweiger Jute- und Flachs-Industriebetriebe GmbH) wurden mittels einer Foulard-Walze mit der 25 %-igen Bindemittelflotte imprägniert, so daß, bezogen auf das trockene Fasergewicht, 25 Gew.-% nichtflüchtige Bindemittelanteile aufgebracht wurden.

Die imprägnierten Fasermatten (35x30 cm) wurden in einem Umlufttrockenschrank bei 80 °C auf einen Restfeuchtegehalt von 10 %, bezogen auf trockene Fasern, getrocknet und mit einer hydraulischen Presse bei einer Presstemperatur von 200 °C und einem Pressdruck von 1,5 N/mm² verpresst. Die Presszeit betrug 2 Minuten.

Die Biegefestigkeit (BF) wurde mittels Dreipunkt-Biegeversuch nach DIN 52352, bei verschiedenen Prüftemperaturen (23 °C, 60 °C und 100 °C) gemessen. Die Dickenquellung (DQ) wurde bestimmt als relative Zunahme der Dicke von 2x2 cm großen Stücken der verpressten Fasermatten nach 2 h bzw. 24 h Lagerung in Wasser bei 23 °C. Die Klimabeständigkeit wurde anhand von 3x10 cm großen Stücken der verpressten Fasermatten beurteilt, die in einem Klimaschrank bei 80 °C und 90 % relativer Luftfeuchtigkeit 1 Tag bzw. 7 tage gelagert wurden. Die Festigkeit der Prüfkörper wurde anschließend anhand einer Notenskala von 1 bis 5 beurteilt, wobei Note 1 einer sehr hohen Festigkeit und Note 5 einer sehr niedrigen Festigkeit entspricht.

Die Ergebnisse der Versuche sind in Tabelle 1 zusammengefasst.

**Tabelle 1**

| | Bsp. 1 | Bsp. 2 | VBsp. 1* | VBsp. 2* | VBsp. 3* | VBsp. 4* |
|---|---|---|---|---|---|---|
| Plattendicke [mm] | 1,60 | 1,49 | 1,65 | 1,59 | 1,55 | 1,47 |
| Dichte [g/cm³] | 0,72 | 0,78 | 0,69 | 0,72 | 0,76 | 0,80 |
| BF 23 °C [N/mm²] | 32,9 | 34,1 | 29,4 | 35,5 | 38,1 | 22,5 |
| BF 60 °C [N/mm²] | 26,0 | 26,7 | 6,1 | 12,6 | 28,8 | 3,2 |
| BF 100 °C [N/mm²] | 20,7 | 19,0 | 2,0 | 2,9 | 22,6 | n. b. |
| DQ 2h [%] | 8 | 7 | 20 | 65 | 31 | 55 |
| DQ 24h [%] | 12 | 15 | 21 | 135 | 57 | 89 |
| Note vor Klimalagerung | 1 | 1 | 1 | 1 | 1 | 3 |
| Note nach 1 Tag Klimalagerung | 2 | 2 | 2 | 5 | 3 | 5 |
| Note nach 7 Tage Klimalagerung | 2 | 3 | 5 | 5 | 4 | 5 |

| | | | | | | |
|---|---|---|---|---|---|---|
| * Vergleichsbeispiel | | | | | | |
| n. B. = nicht bestimmbar | | | | | | |

Die Ergebnisse zeigen die überlegenen Eigenschaften der erfindungsgemäßen Zusammensetzungen (Beispiel 1 und Beispiel 2) gegenüber den reinen Komponenten (A) und (B) (Vergleichsbeispiel 1 und Vergleichsbeispiel 2) als auch gegenüber den nichterfindungsgemäßen Zusammensetzungen (Vergleichsbeispiel 3 und Vergleichsbeispiel 4).

## Patentansprüche

1. Verwendung einer thermisch härtbaren, wäßrigen Zusammensetzung, enthaltend
A) mindestens ein durch radikalische Polymerisation erhältliches Polymerisat, das ≤ 5 Gew.-% einer α,β-ethylenisch ungesättigten Mono- oder Dicarbonsäure einpolymerisiert enthält,
B) mindestens ein durch radikalische Polymerisation erhältliches Polymerisat, das ≥ 15 Gew.-% einer α,β-ethylenisch ungesättigten Mono- oder Dicarbonsäure einpolymerisiert enthält, und
C) mindestens ein Alkanolamin mit mindestens zwei Hydroxylgruppen,
als Bindemittel für Formkörper.

2. Verwendung nach Anspruch 1, wobei die Komponente (A) eine α,β-ethylenisch ungesättigte C₃-C₆-Mono- oder Dicarbonsäure, insbesondere Acrylsäure oder Methacrylsäure, einpolymerisiert enthält.

3. Verwendung nach Anspruch 1 oder 2, wobei die Komponente (A) als Hauptmonomer einen Ester der Acrylsäure oder Methacrylsäure mit einem C₁-C₁₂-Alkanol, eine vinylaromatische Verbindung, einen Vinylester einer C₂-C₁₂-Monocarbonsäure oder einen C₁-C₁₂-Alkylvinylether einpolymerisiert enthält.

4. Verwendung nach einem der vorhergehenden Ansprüche, wobei die Komponente (B) ≥ 20 Gew.-%, insbesondere ≥ 40 Gew.-% der Mono- oder Dicarbonsäure einpolymerisiert enthält.

5. Verwendung nach einem der vorhergehenden Ansprüche, wobei die Komponente (B) als Mono- oder Dicarbonsäure mindestens eine Verbindung einpolymerisiert enthält, die ausgewählt ist unter Acrylsäure, Methacrylsäure, Crotonsäure, Fumarsäure, Maleinsäure, 2-Methylmaleinsäure und Itaconsäure.

6. Verwendung nach einem der vorhergehenden Ansprüche, wobei die Komponente (B) andere ethylenisch ungesättigte Monomere einpolymerisiert enthält, die ausgewählt sind unter Estern der (Meth)acrylsäure mit C₁-C₁₂-Monoalkoholen oder -Dialkoholen, vinylaromatischen Verbindungen, Butadien, Vinylestern von aliphatischen C₂-C₁₂-Monocarbonsäuren, (Meth)acrylnitril, (Meth)acrylamid, N-C₁-C₆-Alkyl(meth)acrylamiden und N,N-Di-C₁-C₆-Alkyl(meth)acrylamiden.

7. Verwendung nach einem der vorhergehenden Ansprüche, wobei die Komponente (C) ausgewählt ist unter Diethanolamin, Triethanolamin und wasserlöslichen, linearen oder verzweigten aliphatischen Verbindungen, die pro Molekül wenigstens zwei funktionelle Aminogruppen vom Typ (a) oder vom Typ (b) 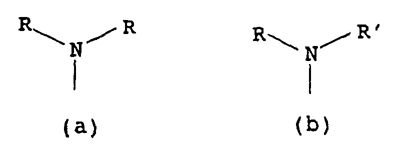 worin R für Hydroxyalkyl steht und R' für Alkyl steht, enthalten.

8. Verwendung nach einem der vorhergehenden Ansprüche, wobei man als Komponente (C) mindestens eine Verbindung der Formel I 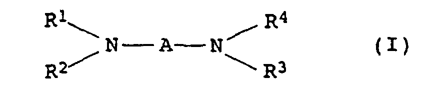 worin
A für C₂-C₁₈-Alkylen steht, das gegebenenfalls substituiert ist durch ein oder mehrere Gruppen, die unabhängig voneinander ausgewählt sind unter Alkyl, Hydroxyalkyl, Cycloalkyl, OH und NR⁶R⁷, wobei R⁶ und R⁷ unabhängig voneinander für H, Hydroxyalkyl oder Alkyl stehen, und das gegebenenfalls unterbrochen ist durch ein oder mehrere Sauerstoffatome und/oder NR⁵-Gruppen, wobei R⁵ für H, Hydroxyalkyl, (CH₂)ₙNR⁶R⁷, wobei n für 2 bis 5 steht und R⁶ und R⁷ die oben angegebenen Bedeutungen besitzen, oder Alkyl, das seinerseits durch ein oder mehrere NR⁵-Gruppen, wobei R⁵ die oben angegebenen Bedeutungen besitzt, unterbrochen und/oder durch ein oder mehrere NR⁶R⁷-Gruppen substituiert sein kann, wobei R⁶ und R⁷ die oben angegebenen Bedeutungen besitzen, steht;
oder A für einen Rest der Formel steht: 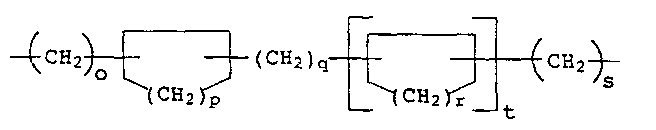 worin
o, q und s unabhängig voneinander für 0 oder eine ganze Zahl von 1 bis 6 stehen,
p und r unabhängig voneinander für 1 oder 2 stehen und
t für 0,1 oder 2 steht,
wobei die cycloaliphatischen Reste auch durch 1, 2 oder 3 Alkylreste substituiert sein können und
R¹, R² und R³ und R⁴ unabhängig voneinander für H, Hydroxyalkyl, Alkyl oder Cycloalkyl stehen, einsetzt.

9. Verwendung nach Anspruch 8, wobei die Komponente (C) ausgewählt ist unter mindestens einer Verbindung der Formel Ia: 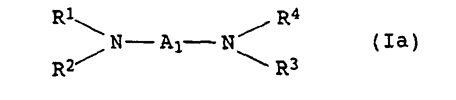 worin
A₁ für C₂-C₁₂-Alkylen steht, das gegebenenfalls durch mindestens eine Alkylgruppe und/oder mindestens eine NR⁶R⁷-Gruppe substituiert ist, wobei R⁶ und R⁷ unabhängig voneinander für Alkyl oder Hydroxyalkyl stehen und
R¹, R², R³ und R⁴ unabhängig voneinander für Hydroxyalkyl oder H stehen oder einer der Reste R¹ und R² und/oder einer der Reste R³ und R⁴ für Alkyl oder Cycloalkyl steht.

10. Verwendung nach Anspruch 8, wobei die Komponente (C) ausgewählt ist unter mindestens einer Verbindung der Formel Ib: 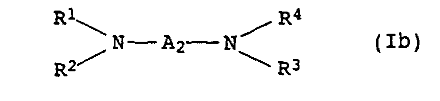 worin
A₂ für C₂-C₈-Alkylen steht, das durch mindestens eine NR⁵-Gruppe unterbrochen ist, wobei R⁵ (oder die Reste R⁵ unabhängig voneinander) für Hydroxyalkyl oder Alkyl steht (stehen) und
R¹, R², R³ und R⁴ unabhängig voneinander für Hydroxyalkyl oder H stehen.

11. Verwendung nach Anspruch 8, wobei die Komponente (C) ausgewählt ist unter mindestens einer Verbindung der Formel Ic: 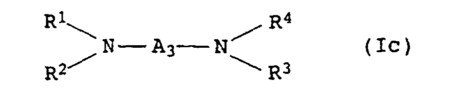 worin
A₃ für C₂-C₈-Alkylen steht, das durch mindestens eine NR⁵-Gruppe unterbrochen ist, wobei R⁵ für H, Hydroxyalkyl oder CH₂CH₂NR⁶R⁷ steht,
R¹, R², R³ und R⁴ unabhängig voneinander für Alkyl stehen, das gegebenenfalls durch mindestens eine NR⁵-Gruppe unterbrochen und/oder durch mindestens eine NR⁶R⁷-Gruppe substituiert ist,
R⁵ für H, Hydroxyalkyl oder -R⁸NR⁶R⁷ steht,
R⁶ und R⁷ unabhängig voneinander für H, Hydroxyalkyl oder -R⁸NR⁶R⁷ stehen und
R⁸ für einen Ethylen- oder Propylenrest steht,
wobei (durchschnittlich) wenigstens 30% der N-Atome eine Hydroxyalkylgruppe tragen.

12. Verwendung nach Anspruch 11, wobei es sich bei der Komponente (C) um ein Umsetzungsprodukt eines Polyethylenimins mit Ethylenoxid handelt.

13. Verwendung nach Anspruch 8, wobei die Komponente (C) ausgewählt ist unter mindestens einer Verbindung der Formel Ie: 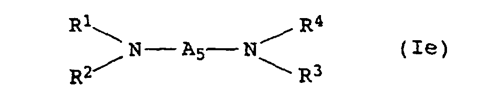 worin
A₅ für C₆-C₁₈-Alkylen steht, das durch mindestens eine NR⁵-Gruppe unterbrochen ist, wobei R⁵ für (CH₂)ₙNR⁶R⁷ oder Alkyl steht, das gegebenenfalls durch wenigstens eine NR⁵-Gruppe, worin R⁵ für (CH₂)ₙR⁶R⁷ oder Alkyl steht, unterbrochen und/oder durch mindestens eine NR⁶R⁷-Gruppe substituiert ist, n für 2 oder 3 steht und
R¹, R², R³, R⁴, R⁶ und R⁷ unabhängig voneinander für Hydroxyalkyl oder H stehen.

14. Verwendung nach Anspruch 8, wobei die Komponente (C) ausgewählt ist unter mindestens einer Verbindung der Formel If: 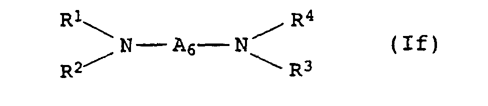 worin
A₆ für C₂-C₁₂-Alkylen steht, das durch mindestens ein Sauerstoffatom unterbrochen ist und
R¹, R², R³ und R⁴ unabhängig voneinander für Hydroxyalkyl oder H stehen.

15. Verwendung nach Anspruch 8, wobei es sich bei der Komponente (C) um Polyalkanolamine handelt, die durch Kondensation von Dialkanolaminen und/oder Trialkanolaminen mit sich selbst, gegebenenfalls in Gegenwart von ein- bzw. mehrwertigen Alkoholen oder ein- bzw. mehrwertigen Aminen, erhältlich sind.

16. Verwendung nach einem der Ansprüche 7 bis 15, wobei es sich bei der Hydroxyalkylgruppe der Komponente (C) in den obigen Definitionen um eine Hydroxypropyl- oder Hydroxyethylgruppe handelt.

17. Verwendung nach einem der vorhergehenden Ansprüche, wobei die Zusammensetzung die Komponenten (A) und (B) im Gewichtsverhältnis (auf Feststoffbasis) von 50:1 bis 1:50 und die Komponenten (B) und (C) im Gewichtsverhältnis 100:1 bis 1:1 enthält.

18. Verwendung nach einem der vorhergehenden Ansprüche, wobei das Molverhältnis von Carboxylgruppen der Komponenten (A) und (B) zu den Hydroxylgruppen der Komponente (C) im Bereich von 20:1 bis 1:5 liegt.

19. Verwendung nach einem der vorhergehenden Ansprüche, wobei die Zusammensetzung zusätzlich einen Reaktionsbeschleuniger enthält.

20. Verwendung nach einem der vorhergehenden Ansprüche, wobei man die Zusammensetzung als Bindemittel für Formkörper aus feinteiligen Materialien, insbesondere aus Fasern, Spänen oder Schnitzeln verwendet.

21. Thermisch härtbare, wäßrige Zusammensetzung wie sie in einem der Ansprüche 1 bis 19 verwendet wird.

22. Zusammensetzung nach Anspruch 21, wobei die Komponente (C) ausgewählt ist unter einer wie in einem der Ansprüche 1 oder 8 bis 16 definierten wasserlöslichen, linearen oder verzweigten aliphatischen Verbindung.

23. Bindemittel, enthaltend eine Zusammensetzung nach Anspruch 21 oder 22.

24. Formkörper, erhältlich durch Imprägnieren eines Substrates mit einer Zusammensetzung nach Anspruch 21 oder 22 bzw. einem Bindemittel nach Anspruch 23 und Aushärten des imprägnierten Substrats.

25. Formkörper nach Anspruch 24, wobei es sich um Platten aus feinteiligen Materialien, insbesondere Spanplatten und Faserplatten, Dämmstoffe oder Faservliese handelt.

## Claims

1. The use of a thermally curable aqueous composition comprising
A) at least one polymer, obtainable by free-radical polymerization, which comprises ≤ 5% by weight of an α,β-ethylenically unsaturated mono- or dicarboxylic acid, in copolymerized form,
B) at least one polymer, obtainable by free-radical polymerization, which comprises ≥ 15% by weight of an α,β-ethylenically unsaturated mono- or dicarboxylic acid, in copolymerized form, and
C) at least one alkanolamine having at least two hydroxyalkyl groups
as a binder for a shaped article.

2. The use as claimed in claim 1, where component (A) contains an α,β-ethylenically unsaturated C₃-C₆ mono- or dicarboxylic acid, especially acrylic or methacrylic acid, in copolymerized form.

3. The use as claimed in claim 1 or 2, where component (A) contains as principal monomer an ester of acrylic or methacrylic acid with a C₁-C₁₂-alkanol, a vinylaromatic compound, a vinyl ester of a C₂-C₁₂ monocarboxylic acid, or a C₁-C₁₂-alkyl vinyl ether, in copolymerized form.

4. The use as claimed in any of the preceding claims, where component (B) contains ≥ 20% by weight, in particular ≥ 40% by weight, of the mono- or dicarboxylic acid in copolymerized form.

5. The use as claimed in any of the preceding claims, where component (B) contains as mono- or dicarboxylic acid, in copolymerized form, at least one compound selected from acrylic, methacrylic, crotonic, fumaric, maleic, 2-methylmaleic and itaconic acid.

6. The use as claimed in any of the preceding claims, where component (B) comprises other ethylenically unsaturated monomers, in copolymerized form, selected from esters of (meth)acrylic acid with C₁-C₁₂ monoalcohols or dialcohols, vinylaromatic compounds, butadiene, vinyl esters of aliphatic C₂-C₁₂ monocarboxylic acids, (meth)acrylonitrile, (moth)acrylamide, N-C₁-C₆-alkyl(meth)acrylamides and N,N-di-C₁-C₆-alkyl(meth)acrylamides.

7. The use as claimed in any of the preceding claims, where component (C) is selected from diethanolamine, triethanolamine and water-soluble, linear or branched aliphatic compounds which comprise per molecule at least two functional amino groups of the type (a) or of the type (b) 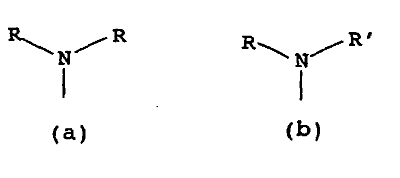 where R is hydroxyalkyl and R' is alkyl.

8. The use as claimed in any of the preceding claims, where the component (C) employed comprises at least one compound of the formula I 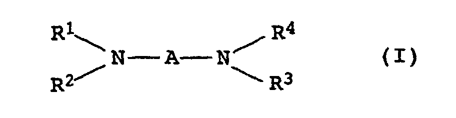 where
A is C₂-C₁₈-alkylene which is unsubstituted or substituted by one or more groups selected independently from alkyl, hydroxyalkyl, cycloalkyl, OH and NR⁶R⁷, where R⁶ and R⁷ independently are H, hydroxyalkyl or alkyl, and which is uninterrupted or interrupted by one or more oxygens and/or groups NR⁵ where R⁵ is H, hydroxyalkyl, (CH₂)ₙNR⁶R⁷, where n is 2 to 5 and R⁶ and R⁷ are as defined above, or alkyl which in turn can be interrupted by one or more groups NR⁵' where R⁵ is as defined above, and/or can be substituted by one or more groups NR⁶R⁷, where R⁶ and R⁷ are as defined above;
or A is a radical of the formula: 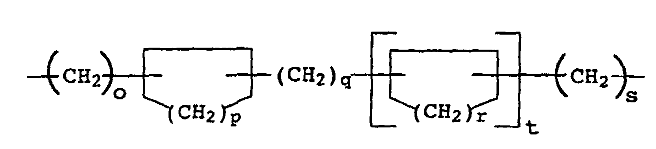 where
o, q and s independently are 0 or an integer from 1 to 6,
p and r independently are 1 or 2 and
t is 0, 1 or 2,
it also being possible for the cycloaliphatic radicals to be substituted by 1, 2 or 3 alkyls, and
R¹, R² and R³ and R⁴ independently are H, hydroxyalkyl, alkyl or cycloalkyl.

9. The use as claimed in claim 8, where the component (C) is selected from at least one compound of the formula Ia: 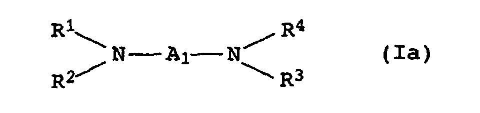 where
A₁ is C₂-C₁₂ alkylene which is unsubstituted or substituted by at least one alkyl and/or at least one group NR⁶R⁷, where R⁶ and R⁷ independently are alkyl or hydroxyalkyl, and
R¹, R², R³ and R⁴ independently are hydroxyalkyl or H, or one of R¹ and R² and/or one of R³ and R⁴ is alkyl or cycloalkyl.

10. The use as claimed in claim 8, where the component (C) is selected from at least one compound of the formula Ib: 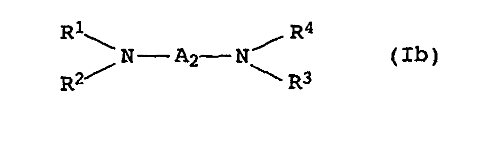 where
A₂ is C₂-C₈-alkylene which is interrupted by at least one group NR⁵ where R⁵ (or each R⁵ independently) is hydroxyalkyl or alkyl, and
R¹, R², R³ and R⁴ independently are hydroxyalkyl or H.

11. The use as claimed in claim 8, where the component (C) is selected from at least one compound of the formula Ic: 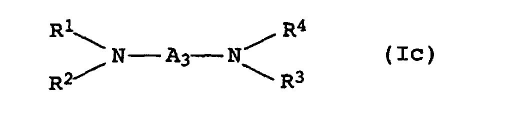 where
A₃ is C₂-C₈-alkylene which is interrupted by at least one group NR⁵ where R⁵ is H, hydroxyalkyl or CH₂CH₂NR⁶R⁷,
R¹, R², R³ and R⁴ independently are alkyl which is uninterrupted or interrupted by at least one group NR⁵ and/or is unsubstituted or substituted by at least one group NR⁶R⁷,
R⁵ is H, hydroxyalkyl or -R⁸NR⁶R⁷ and
R⁶ and R⁷ independently are H, hydroxyalkyl or -R⁸NR⁶R⁷, and
R⁸ is an ethylene or propylene radical,
where (on average) at least 30% of the nitrogens carry a hydroxyalkyl.

12. The use as claimed in claim 11, where component (C) is a reaction product of a polyethyleneimine with ethylene oxide.

13. The use as claimed in claim 8, where component (C) is selected from at least one compound of the formula Ie: 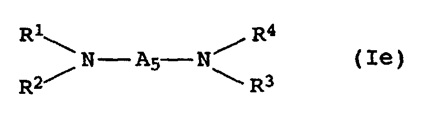 where
A₅ is C₆-C₁₈-alkylene which is interrupted by at least one group NR⁵ where R⁵ is (CH₂)ₙNR⁶R⁷ or alkyl which is uninterrupted or interrupted by at least one group NR⁵ in which R⁵ is (CH₂)ₙR⁶R⁷ or alkyl and/or is unsubstituted or substituted by at least one group NR⁶R⁷,
n is 2 or 3 and
R¹, R², R³, R⁴, R⁶ and R⁷ independently are hydroxyalkyl or H.

14. The use as claimed in claim 8, where component (C) is selected from at least one compound of the formula If: 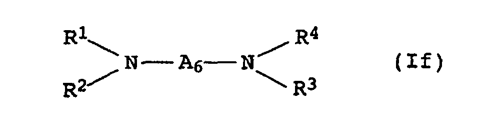 where
A₆ is C₂-C₁₂-alkylene which is interrupted by at least one oxygen, and
R¹, R², R³ and R⁴ independently are hydroxyalkyl or H.

15. The use as claimed in claim 8, where component (C) comprises polyalkanolamines obtainable by condensation of dialkanolamines and/or trialkanolamines with themselves, in the presence or absence of mono- or polyhydric alcohols or mono- or polyfunctional amines.

16. The use as claimed in any of claims 7 to 15, where the hydroxyalkyl of component (C) in the above definitions is a hydroxypropyl or hydroxyethyl.

17. The use as claimed in any of the preceding claims, where the composition comprises components (A) and (B) in a weight ratio (based on solids) of from 50:1 to 1:50 and comprises components (B) and (C) in a weight ratio of from 100:1 to 1:1.

18. The use as claimed in any of the preceding claims, where the molar ratio of carboxyls of component (A) and (B) to hydroxyls of component (C) is in the range from 20:1 to 1:5.

19. The use as claimed in any of the preceding claims, where the composition additionally comprises a reaction accelerant.

20. The use as claimed in any of the preceding claims, where the composition is used as a binder for a shaped article comprising finely divided materials, especially fibers or chips.

21. A thermally curable, aqueous composition as used in any of claims 1 to 19.

22. A composition as claimed in claim 21, where component (C) is selected from a water-soluble, linear or branched aliphatic compound defined as in any of claims 1 and 8 to 16.

23. A binder comprising a composition as claimed in claim 21 or 22.

24. A shaped article obtainable by impregnating a substrate with a composition as claimed in claim 21 or 22 or with a binder as claimed in claim 23 and curing the impregnated substrate.

25. A shaped article as claimed in claim 24, which is a sheet made from finely divided materials, especially chipboard and fiberboard, an insulant or a fiber web.

## Revendications

1. Utilisation d'une composition aqueuse durcissable par voie thermique, contenant
A) au moins un polymère pouvant être obtenu par polymérisation radicalaire, qui contient, polymérisés, ≤ 5 % en poids d'un acide mono- ou dicarboxylique à insaturation α,β-éthylénique,
B) au moins un polymère pouvant être obtenu par polymérisation radicalaire, qui contient, polymérisés, ≥ 15 % en poids d'un acide mono- ou dicarboxylique à insaturation α,β-éthylénique, et
C) au moins un alcanolamine ayant au moins deux groupes hydroxyle,
en tant que liant pour objets moulés.

2. Utilisation selon la revendication 1, pour laquelle le composant (A), contient, polymérisé, un acide mono- ou dicarboxylique en C₃-C₆ à insaturation α,β-éthylénique, en particulier l'acide acrylique ou l'acide méthacrylique.

3. Utilisation selon la revendication 1 ou 2, pour laquelle le composant (A) contient polymérisé, en tant que monomère principal, un ester de l'acide acrylique ou de l'acide méthacrylique avec un alcanol en C₁-C₁₂, un composé vinylaromatique, un ester vinylique d'un acide monocarboxylique en C₂-C₁₂ ou un oxyde d'alkyle en C₁-C₁₂ et de vinyle.

4. Utilisation selon l'une des revendications précédentes, pour laquelle le composant (B) contient, polymérisés, ≥ 20 % en poids, en particulier ≥ 40 % en poids de l'acide mono- ou dicarboxylique.

5. Utilisation selon l'une des revendications précédentes, pour laquelle le composant (B) contient, polymérisé, en tant qu'acide mono- ou dicarboxylique au moins un composé qui est choisi parmi l'acide acrylique, l'acide méthacrylique, l'acide crotonique, l'acide fumarique, l'acide maléique, l'acide 2-méthylmaléique et l'acide itaconique.

6. Utilisation selon l'une des revendications précédentes, pour laquelle le composant (B) contient, polymérisés, d'autres monomères à insaturation éthylénique, qui sont choisis parmi les esters de l'acide (méth)acrylique et de mono- ou dialcools en C₁-C₁₂, les composés vinylaromatiques, le butadiène, les esters vinyliques d'acides monocarboxyliques aliphatiques en C₂-C₁₂, le (méth)-acrylonitrile, le (méth)acrylamide, les N-(alkyle en C₁-C₆)(méth)acrylamides et les N,N-di-(alkyle en C₁-C₆)(méth)acrylamides.

7. Utilisation selon l'une des revendications précédentes, pour laquelle le composant (C) est choisi parmi la diéthanolamine, la triéthanolamine et les composés aliphatiques solubles dans l'eau, linéaires ou ramifiés, qui par molécule contiennent au moins deux groupes amino fonctionnels du type (a) ou du type (b) 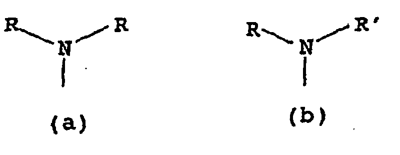 où R est un groupe hydroxyalkyle et R' un groupe alkyle.

8. Utilisation selon l'une des revendications précédentes, pour laquelle on utilise en tant que composant (C) au moins un composé de formule I 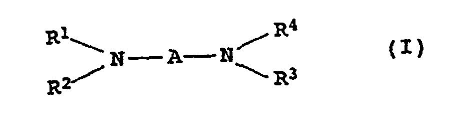 dans laquelle
A est un radical alkylène en C₂-C₁₈, qui est éventuellement substitué par un ou plusieurs groupes qui indépendamment l'un de l'autre sont choisis parmi les groupes alkyle, hydroxyalkyle, cycloalkyle, OH et NR⁶R⁷ où R⁶ et R⁷ représentent chacun indépendamment de l'autre H ou un groupe hydroxyalkyle ou alkyle, et qui est éventuellement interrompu par un ou plusieurs atomes d'oxygène et/ou groupes NR⁵, où R⁵ est H, un groupe hydroxyalkyle, (CH₂)ₙNR⁶R⁷ où n vaut 2 à 5 et R⁶ et R⁷ ont les significations données ci-dessus, ou alkyle, qui pour sa part peut être interrompu par un ou plusieurs groupes NR⁵ où R⁵ a les significations ci-dessus, et/ou peut être substitué par un ou plusieurs groupes NR⁶R⁷ où R⁶ et R⁷ ont les significations données ci-dessus ;
ou encore A est un radical de formule 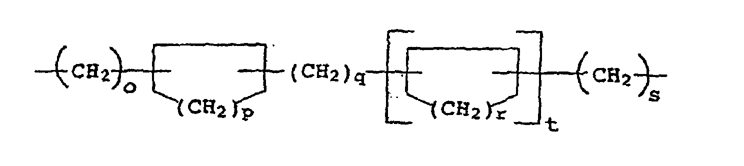 dans laquelle
o, q et s représentent chacun indépendamment de l'autre 0 ou un nombre entier de 1 à 6,
p et r représentent chacun indépendamment de l'autre 1 ou 2, et
t vaut 0, 1 ou 2,
où les radicaux cycloaliphatiques peuvent aussi être substitués par 1, 2 ou 3 radicaux alkyle, et
R¹, R², R³ et R⁴ représentent chacun indépendamment des autres H ou un groupe hydroxyalkyle, alkyle ou cycloalkyle.

9. Utilisation selon la revendication 8, pour laquelle le composant (C) est choisi parmi au moins un composé de formule Ia : 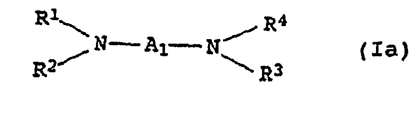 dans laquelle
A₁ est un radical alkylène en C₂-C₁₂, qui est éventuellement substitué par au moins un groupe alkyle et/ou au moins un groupe NR⁶R⁷ où R⁶ et R⁷ représentent chacun indépendamment de l'autre un groupe alkyle ou hydroxyalkyle, et
R¹, R², R³ et R⁴ représentent chacun indépendamment de l'autre un groupe hydroxyalkyle ou H, ou encore l'un des radicaux R¹ et R², et/ou l'un des radicaux R³ et R⁴, est un groupe alkyle ou cycloalkyle.

10. Utilisation selon la revendication 8, pour laquelle le composant (C) est choisi parmi au moins un composé de formule Ib : 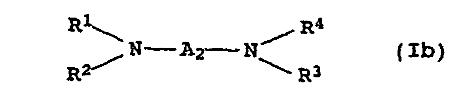 dans laquelle
A₂ est un radical alkylène en C₂-C₈, qui est interrompu par au moins un groupe NR⁵ où R⁵, ou les radicaux R⁵, chacun indépendamment des autres, représente un groupe hydroxyalkyle ou alkyle, et
R¹, R², R³ et R⁴ représentent chacun indépendamment des autres un groupe hydroxyalkyle ou H.

11. Utilisation selon la revendication 8, pour laquelle le composant (C) est choisi parmi au moins un composé de formule Ic : 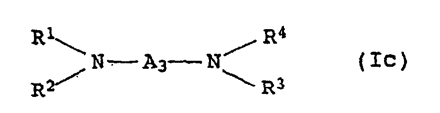 dans laquelle
A₃ est un radical alkylène en C₂-C₈ qui est interrompu par au moins un groupe NR⁵ où R⁵ est H ou un groupe hydroxyalkyle ou CH₂CH₂NR⁶R⁷,
R¹, R², R³ et R⁴ représentent chacun indépendamment des autres un groupe alkyle qui est éventuellement interrompu par au moins un groupe NR⁵ et/ou est substitué par au moins un groupe NR⁶R⁷,
R⁵ est H ou un groupe hydroxyalkyle ou -R⁸NR⁶R⁷,
R⁶ et R⁷ représentent chacun indépendamment de l'autre H, un groupe hydroxyalkyle ou -R⁸NR⁶R⁷, et
R⁸ est un radical éthylène ou propylène,
où en moyenne au moins 30 % des atomes d'azote portent un groupe hydroxyalkyle.

12. Utilisation selon la revendication 11, pour laquelle, pour ce qui concerne le composant (C), il s'agit d'un produit de la réaction d'une polyéthylène-imine avec de l'oxyde d'éthylène.

13. Utilisation selon la revendication 8, pour laquelle le composant (C) est choisi parmi au moins un composé de formule Ie : 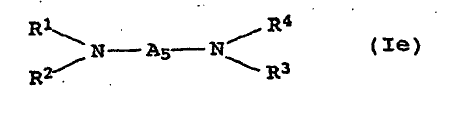 dans laquelle
A₅ est un radical alkylène en C₆-C₁₈ qui est interrompu par au moins un groupe NR⁵, où R⁵ représente (CH₂)ₙNR⁶R⁷ ou un groupe alkyle, qui est éventuellement interrompu par au moins un groupe NR⁵ dans lequel R⁵ est (CH₂)ₙR⁶R⁷ ou un groupe alkyle et/ou qui est substitué par au moins un groupe NR⁶R⁷, n vaut 2 ou 3, et
R¹, R², R³, R⁴, R⁶ et R⁷ représentent chacun indépendamment des autres un groupes hydroxyalkyle ou H.

14. Utilisation selon la revendication 8, pour laquelle le composant (C) est choisi parmi au moins un composé de formule If : 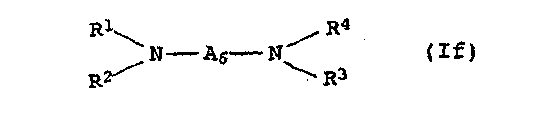 dans laquelle
A₆ est un radical alkylène en C₂-C₁₂ qui est interrompu par au moins un atome d'oxygène, et
R¹, R², R³ et R⁴ représentent chacun indépendamment des autres un groupe hydroxyalkyle ou H.

15. Utilisation selon la revendication 8, pour laquelle, pour ce qui concerne le composant (C), il s'agit de polyalcanolamines que l'on peut obtenir par condensation de dialcanolamines et/ou de trialcanolamines avec elles-mêmes, éventuellement en présence de mono- ou polyalcools ou de mono- ou polyamines.

16. Utilisation selon l'une ou plusieurs des revendications 7 à 15, pour laquelle, pour ce qui concerne le groupe hydroxyalkyle du composant (C), il s'agit dans les définitions ci-dessus d'un groupe hydroxypropyle ou hydroxyéthyle.

17. Utilisation selon l'une des revendications précédentes, pour laquelle la composition contient les composants (A) et (B) selon un rapport en poids, par rapport à l'extrait sec, de 50:1 à 1:50, et les composants (B) et (C) selon un rapport en poids de 100:1 à 1:1.

18. Utilisation selon l'une des revendications précédentes, pour laquelle le rapport en moles des groupes carboxyle des composants (A) et (B) aux groupes hydroxyle du composant (C) est compris dans la plage de 20:1 à 1:5.

19. Utilisation selon l'une des revendications précédentes, pour laquelle la composition contient en outre un accélérateur de réaction.

20. Utilisation selon l'une des revendications précédentes, pour laquelle on utilise la composition en tant que liant pour objets moulés en des matériaux finement divisés, en particulier des fibres, des copeaux ou des rognures.

21. Composition aqueuse durcissable par voie thermique telle qu'utilisée dans l'une des revendications 1 à 19.

22. Composition selon la revendication 21, dans laquelle le composant (C) est choisi parmi un composé aliphatique soluble dans l'eau, linéaire ou ramifié, tel que défini dans l'une des revendications 1 ou 8 à 16.

23. Liant contenant une composition selon la revendication 21 ou 22.

24. Objet moulé pouvant être obtenu par imprégnation d'un substrat par une composition selon la revendication 21 ou 22 ou un liant selon la revendication 23, et durcissement du substrat imprégné.

25. Objet moulé selon la revendication 24, pour ce qui concerne lequel il s'agit de plaques en des matériaux finement divisés, en particulier des panneaux de particules et des panneaux de fibres, des matériaux isolants ou des non-tissés.
